# EUROPEAN PATENT APPLICATION

(11) **EP 4 697 169 A1**
(43) Date of publication of application: **18.02.2026**
(21) Application number: 24878967.9
(22) Date of filing: 14.10.2024
(51) Int. Cl.: G06F 9/50

(54) **TERMINAL-CLOUD COMPUTING POWER COLLABORATIVE SCHEDULING METHOD, RELATED SYSTEM, AND DEVICE**

(30) Priority: 20.10.2023 CN 202311376083
(71) Applicant: Huawei Technologies Co., Ltd., Shenzhen, Guangdong 518129 (CN)
(72) Inventor: LI, Linfeng, Shenzhen, Guangdong 518129 (CN); LI, Gaofeng, Shenzhen, Guangdong 518129 (CN); LIU, Lianxi, Shenzhen, Guangdong 518129 (CN); WANG, Jun, Shenzhen, Guangdong 518129 (CN); HUANG, Jin, Shenzhen, Guangdong 518129 (CN)
(74) Representative: Goddar, Heinz J.
(86) International application number: PCT/CN2024/124774
(87) International publication number: WO 2025/082323

(57) **Abstract**

Embodiments of this application provide a mobile-cloud computing power collaborative dispatching method, a related system, and a device. The method may be applied to a mobile-cloud computing power collaborative dispatching system, and the system may include a terminal device and a cloud server. The terminal device may execute a dispatching policy, to determine to dispatch a task in a program to a mobile side for execution or a cloud side for execution. In this way, a cloud computing power becomes a part of a mobile computing power, implementing collaborative dispatching of mobile and cloud tasks. This solves a problem of an insufficient mobile computing power and avoids an idle mobile computing power and high costs on the cloud side that are caused by placing all logic and computing powers on the cloud side.

## Description

This application claims priority to Chinese Patent Application No. 202311376083.X, filed with the China National Intellectual Property Administration on October 20, 2023, and entitled "MOBILE-CLOUD COMPUTING POWER COLLABORATIVE DISPATCHING METHOD, RELATED SYSTEM, AND DEVICE", which is incorporated herein by reference in its entirety.

### TECHNICAL FIELD

This application relates to the field of electronic technologies, and in particular, to a mobile-cloud computing power collaborative dispatching method, a related system, and a device.

### BACKGROUND

With wide application of artificial intelligence (artificial intelligence, AI) technologies in various industries, deep learning models used by application programs on terminal devices such as mobile phones and tablet computers are increasingly complex. As a result, the deep learning models have higher requirements on a chip computing power. Limited by a manufacturing process, power consumption, heat generation, and costs of a chip on a terminal device side, a computing power on the terminal device side increases slowly. Consequently, it is difficult to meet high computing power requirements of AI algorithms and tasks such as graphics rendering of graphics processing units (graphics processing unit, GPU), and application program innovation is affected.

### SUMMARY

Embodiments of this application provide a mobile-cloud collaborative computing power dispatching method, a communication system, and a related device, to implement collaborative dispatching of computing powers on a terminal device side and a cloud server side, and flexibly balance program running performance and costs.

According to a first aspect, an embodiment of this application provides a mobile-cloud collaborative computing power dispatching method, and the method may be applied to a terminal device in a first communication system. The first communication system may include the terminal device and a server, and a first program is installed on the terminal device. A software package of the first program includes program code, the program code includes code of a cloud task and code of a mobile task, the code of the cloud task includes a first code segment, the first code segment is used to declare that a task type is a cloud task, the code of the mobile task includes a second code segment, and the second code segment is used to declare that a task type is a mobile task.

The method may include: The terminal device determines, according to a dispatching policy, whether to dispatch a to-be-executed task in the first program to the server for execution; if the to-be-executed task is dispatched to the server for execution, the terminal device sends code of the to-be-executed task to the server, so as to request the server to execute the to-be-executed task by using a cloud computing power resource; otherwise, the terminal device executes the to-be-executed task by using a mobile computing power resource. The mobile computing power resource includes a processor resource on the terminal device, and the cloud computing power resource includes a processor resource on the server. The terminal device receives an execution result that is of the to-be-executed task and that is returned by the server.

The dispatching policy may be formulated based on but not limited to one or more of the following factors: a task type, power consumption of the terminal device, a temperature of the terminal device, a network status between the terminal device and the server, and a cloud computing power load.

According to a second aspect, an embodiment of this application provides a mobile-cloud collaborative computing power dispatching method, and the method may be applied to a server in a first communication system. The first communication system may include a terminal device and the server, and a first program is installed on the terminal device. A software package of the first program includes program code, the program code includes code of a cloud task and code of a mobile task, the code of the cloud task includes a first code segment, the first code segment is used to declare that a task type is a cloud task, the code of the mobile task includes a second code segment, and the second code segment is used to declare that a task type is a mobile task.

The method may include: The server receives code that is of a to-be-executed task in the first program and that is sent by the terminal device, where the to-be-executed task is determined by the terminal device to be dispatched to the server for execution; the server executes the to-be-executed task by using a cloud computing power resource, where the cloud computing power resource includes a processor resource on the server; and the server sends an execution result of the to-be-executed task to the terminal device.

By implementing the methods in the first aspect and the second aspect, a program can be run collaboratively by using the mobile computing power resource and the cloud computing power resource, and program running performance and costs are balanced.

In the first aspect and the second aspect, the task in the first program may be implemented according to a first programming framework. The first programming framework is a mobile-cloud collaborative programming framework mentioned in subsequent embodiments, and may include interfaces used to declare a task type: "MobileTask" and "CloudTask". The interface "MobileTask" may be used to declare that a task type of a task is a mobile task, and the interface "CloudTask" may be used to declare that a task type of a task is a cloud task. In addition to a mobile task and a cloud task, the mobile-cloud collaborative programming framework may further include an interface used to declare a task type of a mobile-cloud task: "MobileCloudTask". A program developer may choose to inherit a task from MobileTask, CloudTask, or MobileCloudTask based on an actual computing power requirement of each task in a program. Specifically, in the first program, the mobile task is inherited from (or implemented through) the MobileTask interface, the cloud task is inherited from (or implemented through) the CloudTask interface, and a mobile-cloud task is inherited from (or implemented through) the MobileCloudTask interface.

In the software package of the first program, the code of the cloud task and the code of the mobile task have respective characteristics. To be specific, the code of the mobile task may include the first code segment, and the code of the cloud task may include the second code segment. Therefore, the terminal device may identify a task type based on machine code of a task. The first code segment may be a segment of machine code generated by compiling source code (for example, "extends MobileTask") used to declare that a task type is a mobile task, and the second code segment may be a segment of machine code generated by compiling source code (for example, "extends Cloud Task") used to declare that a task type is a cloud task.

In this way, by using the mobile-cloud collaborative programming framework provided in embodiments of this application, a program developer can implement computing power collaboration between a mobile side and a cloud side through one-time development, and can flexibly dispatch a task in a program to the cloud side or the mobile side for execution based on factors such as a mobile computing power load, mobile power consumption, mobile temperature control, a network status, and a cloud computing power load, so that a cloud computing power becomes a part of a mobile computing power.

With reference to the first aspect, in some embodiments, the program code of the first program may further include code of a mobile-cloud task. The code of the mobile-cloud task may include a third code segment, and the third code segment may be a segment of machine code converted from source code (for example, "extends MobileCloudTask") used to declare that a task type is a mobile-cloud task.

With reference to the first aspect or the second aspect, in some embodiments, the software package of the first program may further include a first file, and the first file indicates a dependency relationship between tasks in the first program. The first file is a dependency relationship orchestration file mentioned in subsequent embodiments. The terminal device may extract the first file from the software package of the first program, so as to provide the dependency relationship between the tasks for the cloud server by using a communication proxy service, so that the cloud server executes the tasks based on the dependency relationship. In some embodiments, the dependency relationship is not required when the terminal device executes the tasks, because task dispatching on the mobile side is code-level dispatching, and no additional configuration file is required.

With reference to the first aspect or the second aspect, in some embodiments, the method in the first aspect further includes: The terminal device sends the first file to the server, so that the server determines a dependency relationship between to-be-executed tasks.

Specifically, the terminal device 20 may serialize the dependency relationship recorded in the first file into a byte array, and then place the byte array in a message header of a request message. In this way, after receiving the request message, the cloud server may parse out the dependency relationship from the message header. An example of the dependency relationship placed in the message header may be as follows: taskDAGs : byte [] Codec(in : taskDAGs.json). "Codec(in : taskDAGs.json)" indicates that a dependency relationship orchestration file taskDAGs.json is encoded into a bytecode array.

With reference to the first aspect, in some embodiments, the first file specifically indicates the dependency relationship between the tasks in the first program by recording execution ranks and context data of the tasks, and the context data includes an input parameter and an output parameter of the task. That is, the dependency relationship between the tasks may be used to describe the execution ranks of the tasks, and the input parameter and the output parameter of each task. That a task a depends on a task b may be reflected in that an execution rank of the task b is earlier than an execution rank of the task a, and an input parameter of the task a includes an output parameter (an execution result) of the task b.

With reference to the first aspect or the second aspect, in some embodiments, the dispatching policy may include but is not limited to one or more of the following:

### 1. Task type policy

Task dispatching is performed based on a task type. To be specific, a mobile task is chosen to be dispatched to the mobile side for execution, and a cloud task is chosen to be dispatched to the cloud side for execution. A mobile-cloud task may be chosen to be dispatched to the mobile side or the cloud side for execution.

Different task types reflect different computing power requirements. Generally, the program developer declares a light-load task as a mobile task and a heavy-load task as a cloud task. The program developer may alternatively declare a heavy-load task as a mobile-cloud task, and declare a light-load task as a mobile-cloud task.

The program developer may declare a task type of each task in the first program by using the mobile-cloud collaborative programming framework. In the software package of the first program, the machine code of the cloud task and the machine code of the mobile task have respective characteristics. Therefore, the terminal device can identify tasks of different task types. The following describes a data characteristic of the software package of the first program, and details are not described herein.

### 2. Allowlist policy

Allowlist verification is performed, for example, whether a model of the terminal device belongs to a preset model, whether a type of an application program belongs to a preset type, and whether the terminal device is currently in a preset area are verified; and if allowlist verification succeeds, a task is chosen to be dispatched to the cloud side for execution; otherwise, the task is chosen to be dispatched to the mobile side for execution. In some embodiments, a mobile allowlist policy may be applied only to dispatching of the cloud task and the mobile-cloud task. The mobile task may be dispatched to the mobile side for execution based on the task type policy.

### 3. Mobile power consumption policy

In consideration of power consumption of the terminal device, if a remaining battery level of the terminal device is less than a first battery level value, for example, 30%, the mobile-cloud task is chosen to be dispatched to the cloud side for execution, to reduce mobile power consumption. In some embodiments, the mobile power consumption policy may be applied only to dispatching of the mobile-cloud task. Dispatching of the cloud task and the mobile task may be considered based on the task type policy and the like.

### 4. Mobile temperature control policy

In consideration of a temperature of the terminal device, if the temperature of the terminal device is higher than a first temperature, for example, 38°C, a task is chosen to be dispatched to the cloud side for execution, so as to alleviate a problem that a temperature on the mobile side is excessively high. In some embodiments, the mobile temperature control policy may be applied only to dispatching of the mobile-cloud task. Dispatching of the cloud task and the mobile task may be considered based on the task type policy and the like.

### 5. Network status policy

In consideration of communication quality between the terminal device and the cloud server, if the communication quality is high, a task is chosen to be dispatched to the cloud side for execution; otherwise, the task is chosen to be dispatched to the mobile side for execution. The communication quality may include but is not limited to a bandwidth, a delay, and the like. A standard of high communication quality may include but is not limited to: A communication bandwidth is greater than a first bandwidth (for example, 200 Mbps), and a communication delay is less than a first delay (for example, 1 millisecond). In some embodiments, the network status policy may be applied only to dispatching of the cloud task and the mobile-cloud task. The mobile task may be dispatched to the mobile side for execution based on the task type policy.

### 6. Cloud computing power load policy

In consideration of a cloud computing power load, if the cloud computing power load is lower than a first ratio, for example, 60%, a task is chosen to be dispatched to the cloud side for execution. Otherwise, the task is chosen to be dispatched to the mobile side for execution. Cloud computing power load = Cloud computing power resource usage/Total cloud computing power resource. In some embodiments, the network status policy may be applied only to dispatching of the cloud task and the mobile-cloud task. The mobile task may be dispatched to the mobile side for execution based on the task type policy.

### 7. Dynamic factor policy

For task dispatching, an available bandwidth between the terminal device and the cloud server is dynamically detected, and whether transmission duration of a task meets a delay requirement of the task is further considered, for example, a delay requirement indicated by a parameter deadline in a method submit(). If the delay requirement is met, the task is chosen to be dispatched to the cloud side for execution. Otherwise, the task is chosen to be dispatched to the mobile side for execution.

Transmission duration of a task may be estimated based on a data packet size of the task and a real-time available bandwidth. A data packet size of a task depends on a size of machine code of the task. In some embodiments, the dynamic factor policy may be applied only to dispatching of the cloud task and the mobile-cloud task. The mobile task may be dispatched to the mobile side for execution based on the task type policy.

By formulating a dispatching policy, factors such as a computing power requirement of each task, mobile power consumption, mobile temperature control, a network status, and a cloud computing power load may be considered to implement task dispatching, so that task dispatching can more flexibly adapt to different scenarios.

Not limited to the foregoing dispatching policy, the program developer may further self-define a dispatching policy based on a service characteristic of a program. For example, a home location of a user number is determined. If the user is an international user, it is determined that the task is not to be executed on the cloud side.

With reference to the first aspect or the second aspect, in some embodiments, the software package of the first program may further include a second file, and the second file is used to record a dispatching policy. The second file is a dispatching policy file mentioned in subsequent embodiments. When the terminal device runs an application program, the terminal device may read the dispatching policy in the file, and execute task dispatching according to the dispatching policy. The file may be packaged in a software package of the application program. The terminal device may obtain the file after downloading the software package of the application program.

With reference to the first aspect or the second aspect, in some embodiments, that the terminal device sends the code of the to-be-executed task to the server specifically includes: The terminal device sends a first request message to the server, where a message header of the first request message carries the first file that is serialized into a byte array, and a message body of the first request message carries the code of the to-be-executed task. Machine code of the to-be-executed task may be organized into a binary file, for example, a .so file. The message body may be a byte array, which may be used to store a file (such as a .so file) serialized into a byte array.

With reference to the first aspect or the second aspect, in some embodiments, the first request message further carries an input parameter of the to-be-executed task. The input parameter may be specifically stored in the message body of the request message. An input parameter of a task may be an output parameter (for example, an execution result) of another task on which the task depends. Assuming that a task a is an image rendering task, an input parameter of the task a may be a RAW image collected by a camera, and may be an output parameter of an image capture task on which the task a depends. The input parameter of the task a may be encoded into a byte array and then stored in a message body of a request message, so as to be sent to the cloud server 30 for rendering processing.

With reference to the first aspect or the second aspect, in some embodiments, the terminal device may adjust a transmission rate of the to-be-executed task by using a fast link establishment method, so that a network transmission delay can be reduced.

Specifically, that the terminal device sends the code of the to-be-executed task to the server may specifically include: The terminal device transmits data at a test rate v_test within a first round trip time RRT for sending the code of the to-be-executed task to the server; the terminal device receives an acknowledgment ACK that is returned by the server and that is for first-round sent data; and the terminal device adjusts, based on a receiving time of the ACK, a transmission rate for sending the code of the to-be-executed task to a start rate v_start, where v_start = m/Δt, m represents a data volume of the first-round sent data, Δt = t2 - t1, t1 represents a start transmission time of the first-round sent data, and t2 represents the receiving time of the ACK for the first-round sent data, where the test rate v_test is greater than the start rate v_start.

With reference to the first aspect or the second aspect, in some embodiments, when the terminal device sends the code of the to-be-executed task to the server, the terminal device may further perform a congestion control method at an RTT granularity, to resist interference from weak network noise of a wide area network, and more accurately estimate an available bandwidth. Specifically, the method may include: The terminal device obtains one or more types of the following data: delay information, a packet loss rate, and a receiving rate, and analyzes the data to identify noise intensity of a weak network signal, where the noise intensity includes: noise intensity of an RTT jitter and a random packet loss; if the noise intensity is greater than a first threshold, the terminal device corrects abnormal data causing noise; and the terminal device determines an available bandwidth based on one or more types of the following data: the delay information, the packet loss rate, and the receiving rate that are corrected. In this way, interference from the weak network noise of the wide area network can be resisted, and a congestion control module with traffic characteristic sensing is introduced to adjust a rate in time based on a traffic characteristic of an application program, thereby ensuring transmission efficiency.

With reference to the first aspect or the second aspect, in some embodiments, when the terminal device sends the code of the to-be-executed task to the server, the terminal device may further perform congestion control based on traffic characteristic sensing, and may adjust a rate in time based on a traffic characteristic of an application program, thereby ensuring transmission efficiency. Specifically, the method may include: The terminal device identifies a traffic valley period during running of the first program, and probes an uplink network bandwidth in the traffic valley period and obtains an uplink probing bandwidth, where the traffic valley period is a phase in which the terminal device transmits code of a first task to the server, and a data volume of the code of the first task is greater than a first data volume; and the terminal device adjusts a transmission rate during a traffic peak period based on the uplink probing bandwidth and a historical maximum available bandwidth, where an adjusted transmission rate is a smaller one of the uplink probing bandwidth and the historical maximum available bandwidth, the traffic peak period is a phase in which the terminal device transmits code of a second task to the server, a data volume of the code of the second task is less than a second data volume, and the second data volume is less than or equal to the first data volume.

According to a third aspect, this application provides a terminal device, where the terminal device includes a processor and a memory, the memory is coupled to the processor, the memory is configured to store computer program code, the computer program code includes computer instructions, and when the processor executes the computer instructions, the terminal device is enabled to perform the method described in any one of the first aspect and the possible implementations of the first aspect.

According to a fourth aspect, this application provides a server, where the server includes a processor and a memory, the memory is coupled to the processor, the memory is configured to store computer program code, the computer program code includes computer instructions, and when the processor executes the computer instructions, the server is enabled to perform the method described in any one of the second aspect and the possible implementations of the second aspect.

According to a fifth aspect, an embodiment of this application provides a chip system. The chip system is applied to a terminal device. The chip system includes one or more processors. The processor is configured to invoke computer instructions to enable the terminal device to perform the method described in any one of the first aspect and the possible implementations of the first aspect.

According to a sixth aspect, an embodiment of this application provides a chip system. The chip system is applied to a server. The chip system includes one or more processors. The processor is configured to invoke computer instructions to enable the server to perform the method described in any one of the second aspect and the possible implementations of the second aspect.

According to a seventh aspect, this application provides a computer-readable storage medium, including instructions. When the instructions are run on a terminal device, the terminal device is enabled to perform the method described in any one of the first aspect and the possible implementations of the first aspect.

According to an eighth aspect, this application provides a computer program product including instructions. When the computer program product is run on a server, the server is enabled to perform the method described in any one of the second aspect and the possible implementations of the second aspect.

According to a ninth aspect, this application provides a communication system, where the communication system may include a terminal device and a server, the terminal device may be the terminal device in any one of the first aspect and the possible implementations of the first aspect, and the server may be the server in any one of the second aspect and the possible implementations of the second aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 shows a working process of a photographing application program;
FIG. 2 shows a working process of a cloud game;
FIG. 3 shows an example of mobile-cloud computing power collaborative dispatching implemented in an embodiment of this application;
FIG. 4A to FIG. 4C show examples of several task dispatching scenarios;
FIG. 5 shows an example of a mobile-cloud computing power collaborative dispatching system according to an embodiment of this application;
FIG. 6 shows different states of a task in a program in a life cycle of the task;
FIG. 7 shows an example in which a dependency relationship is graphically recorded in a configuration file in a format such as YAML\XML;
FIG. 8 shows an example of a function of an access module in a cloud server;
FIG. 9 shows an example of a function of a task dispatching and execution module in a cloud server;
FIG. 10 shows a mobile-cloud collaborative programming framework according to an embodiment of this application;
FIG. 11 shows an example of an overall procedure of a mobile-cloud computing power collaborative dispatching method according to an embodiment of this application;
FIG. 12 shows a function of a communication proxy service in a terminal device;
FIG. 13 shows functions implemented by a communication proxy service and a dispatching policy service in a terminal device;
FIG. 14 shows a high-performance and reliable protocol transmission framework implemented on a terminal device side;
FIG. 15 shows an example of a procedure of a fast link establishment method according to an embodiment of this application;
FIG. 16 shows an existing congestion control method;
FIG. 17 shows an example of an architecture for implementing congestion control according to an embodiment of this application;
FIG. 18 shows an example of a procedure of a congestion control method according to an embodiment of this application;
FIG. 19 shows a terminal device according to an embodiment of this application; and
FIG. 20 shows a server according to an embodiment of this application.

### DESCRIPTION OF EMBODIMENTS

Terms used in the following embodiments of this application are merely intended to describe specific embodiments, but are not intended to limit this application.

To meet high computing power requirements of AI algorithms and tasks such as graphics rendering of graphics processing units (graphics processing unit, GPU), the industry mainly has two solutions to this problem.

One solution is to optimize an AI model used on a terminal device side, and tailor the AI model to miniaturize the AI model as much as possible, thereby reducing a computing power requirement of the AI model. However, a problem caused by model simplification is that an AI processing effect is poor, and an expected effect cannot be achieved.

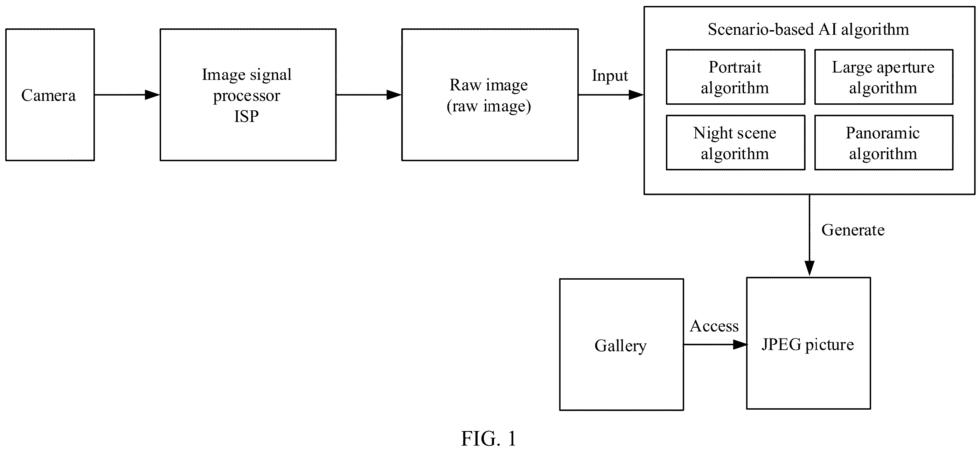

A photographing function of a mobile phone is used as an example. As shown in FIG. 1, after a raw image (RAW image) is generated by using an image sensor and an image signal processor (image signal processor, ISP), the mobile phone executes some camera AI algorithms to perform processing such as noise reduction, beautification, and super resolution (super resolution, SR) for scenarios such as portrait and macro, to generate a photo with higher image quality. A user can view, through an application program such as gallery, an image processed by AI. Compared with the raw image, the image processed by AI can improve image quality by about 20%. However, because photographing performance is an important competition point of major mobile phone manufacturers, an AI algorithm of the photographing function is increasingly complex. However, due to an insufficient computing power of the mobile phone, an execution effect of an image processing algorithm is poor. For example, an image is blurry in a portrait photographing scenario such as long-focal-length photographing, group photo taking, and motion snapshot, which cannot meet an expectation of a user.

In the other solution, all tasks of an application program on a terminal device side are run on a cloud server, and a high computing power of the cloud server is used to compensate for an insufficient computing power on the terminal device side. For example, all computing tasks of a cloud game are run on the cloud server, and a terminal device in a user's hand is only used as an input/output device to receive user input, provide display, output sound, and the like. However, in this solution, an application program provider needs to pay a high cloud server usage fee, and the computing power on the terminal device side is also idle.

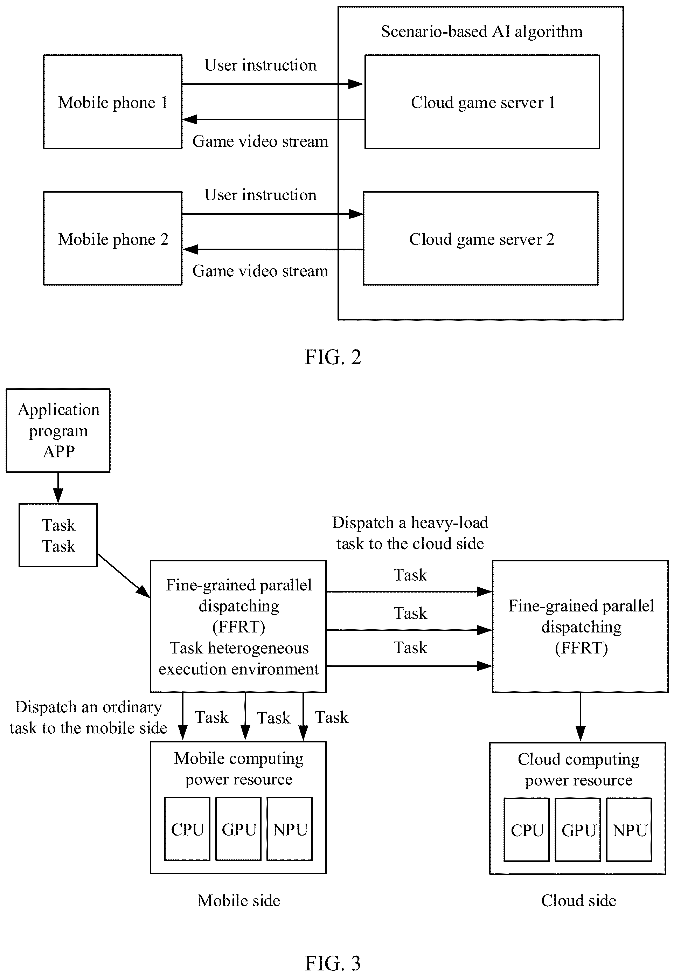

For example, as shown in FIG. 2, all the computing tasks of the cloud game are executed on the cloud server, and terminal devices such as a mobile phone 1 and a mobile phone 2 are only configured to receive user input and display a video stream of the game. With the computing power of the cloud server, a running effect of the cloud game may be far better than that of the cloud game on the mobile phone. However, a cloud computing power resource need to be allocated on the cloud server to the game enabled on each mobile phone. In addition, computing power costs on the cloud server side are high, and a cloud game provider needs to pay high use fees of the cloud server, which hinders large-scale commercial use of the cloud game.

Embodiments of this application provide a mobile-cloud computing power collaborative dispatching system, a mobile-cloud computing power collaborative dispatching method, and a related device, so that a program can be run collaboratively by using a mobile computing power resource and a cloud computing power resource, and program running performance and costs are balanced.

**FIG. 3** **shows an example of mobile-cloud computing power collaborative dispatching implemented in an embodiment of this application.**

As shown in FIG. 3, an application program on a terminal device may be divided into a plurality of tasks (task). A light-load task may be dispatched to the terminal device for execution, and uses a mobile computing power resource, for example, a computing power resource including a central processing unit (central processing unit, CPU), a graphics processing unit (GPU), and a neural processing unit (neural processing unit, NPU) on the terminal device. A heavy-load task may be dispatched to a cloud server for execution, and uses a cloud computing power resource, for example, a computing power resource including a central processing unit (CPU), a graphics processing unit (GPU), and a neural processing unit (NPU) on the cloud server.

Mobile-cloud computing power collaborative dispatching ensures a computing power requirement of the heavy-load task and improves a program running effect. In addition, the mobile computing power resource can be used to run the light-load task, preventing all program running from being deployed on the cloud side and reducing program running costs.

For example, in a graphics rendering field, a GPU rendering task area is divided into a heavy-load rendering task (for example, light tracking) and a light-load rendering task, the heavy-load rendering task is dispatched to the cloud server for execution, and the light-load rendering task is dispatched to the terminal device for execution. After completing execution of the heavy-load rendering task, the cloud server returns an image processing result such as a video stream/picture to the terminal device. In this way, a GPU rendering effect can be improved, for example, a picture effect of light tracking is improved, and a computing power on a terminal device side is not idle, thereby reducing cloud computing power use costs of graphics rendering.

For another example, in a general-purpose computing field, AI algorithms are classified into a heavy-load algorithm and a light-load algorithm, the heavy-load algorithm is dispatched to the cloud server for execution, and the light-load algorithm (for example, a photographing scenario identification algorithm for a portrait and food) is dispatched to the terminal device for execution. In this way, a running effect of the AI algorithm can be improved, and the computing power on the terminal device side is not idle, thereby reducing cloud computing power use costs of the AI algorithm.

In this embodiment of this application, the heavy-load task is a task having a high computing power requirement, and the computing power requirement of the heavy-load task generally needs to be ensured by a cloud computing power; and the light-load task is a task having a low computing power requirement, and the computing power requirement of the light-load task may be met by a mobile computing power.

In this embodiment of this application, a task is a function module of a program. A program may be divided into a plurality of function modules based on tasks. One task may be one function, or may be formed by a plurality of functions that complete a same function unit. A function includes a function header and a function body. The function header includes a function name, a return value type, and a parameter list. The function body includes a statement block executed by the function.

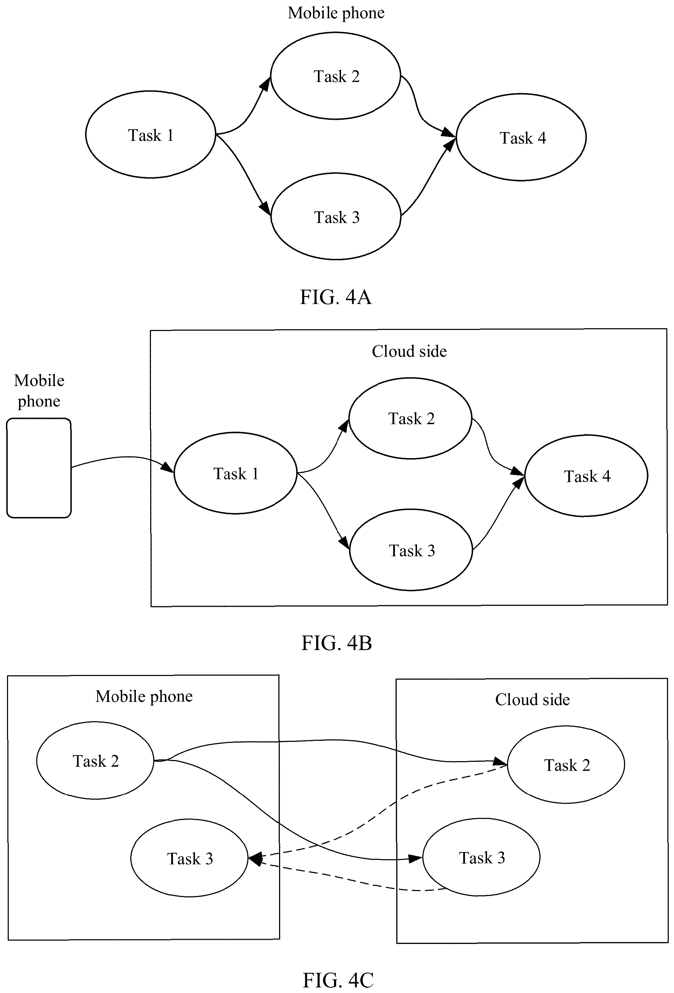

FIG. 4A to FIG. 4C show examples of several task dispatching scenarios. All tasks (a task 1 to a task 4) in an application program shown in FIG. 4A are light-load tasks. When a mobile computing power resource is sufficient, all the tasks in the application program may be dispatched to the terminal device for execution. All tasks (a task 1 to a task 4) in an application program shown in FIG. 4B are heavy-load tasks. All the tasks in the application program may be dispatched to the cloud server for execution. In an application program shown in FIG. 4C, some tasks (a task 1 and a task 4) are light-load tasks, and the other tasks (a task 2 and a task 3) are heavy-load tasks. In this case, the light-load tasks may be dispatched to the terminal device for execution, and the heavy-load tasks may be dispatched to the cloud server for execution.

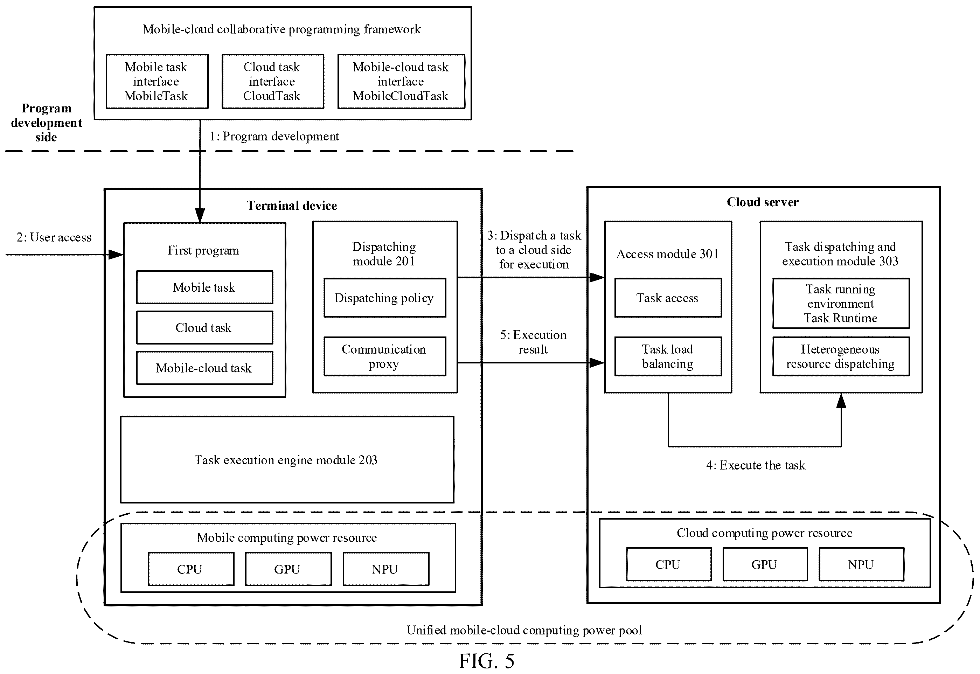

**FIG. 5** **shows an example of a mobile-cloud computing power collaborative dispatching system according to an embodiment of this application.**

As shown in FIG. 5, the system includes a terminal device 20 and a cloud server 30. A first program may be installed on the terminal device 20. The first program is developed by a program developer based on a mobile-cloud collaborative programming framework. The framework is described in the following, and is not described in detail herein. Tasks in the first program may include the following types: a cloud task and a mobile task. The mobile task may be a task dispatched to the terminal device 20 for execution, and the cloud task may be a task dispatched to the cloud server 30 for execution. The plurality of tasks may further include a mobile-cloud task. The mobile-cloud task is a task that may be dispatched to the terminal device 20 for execution, or may be dispatched to the cloud server 30 for execution.

The terminal device 20 may be configured to send a cloud task or a mobile-cloud task to the cloud server 30, and request the cloud server 30 to execute the task. Correspondingly, the cloud server 30 may respond to the request of the terminal device 20, execute the task, and return an execution result to the terminal device 20, so that the terminal device 20 updates a running status of the first program, for example, refreshes an interface. In this way, a cloud computing power becomes a part of a mobile computing power, implementing collaborative dispatching of mobile and cloud tasks. This solves a problem of an insufficient mobile computing power and avoids an idle mobile computing power and high costs on the cloud side that are caused by placing all logic and computing powers on the cloud side.

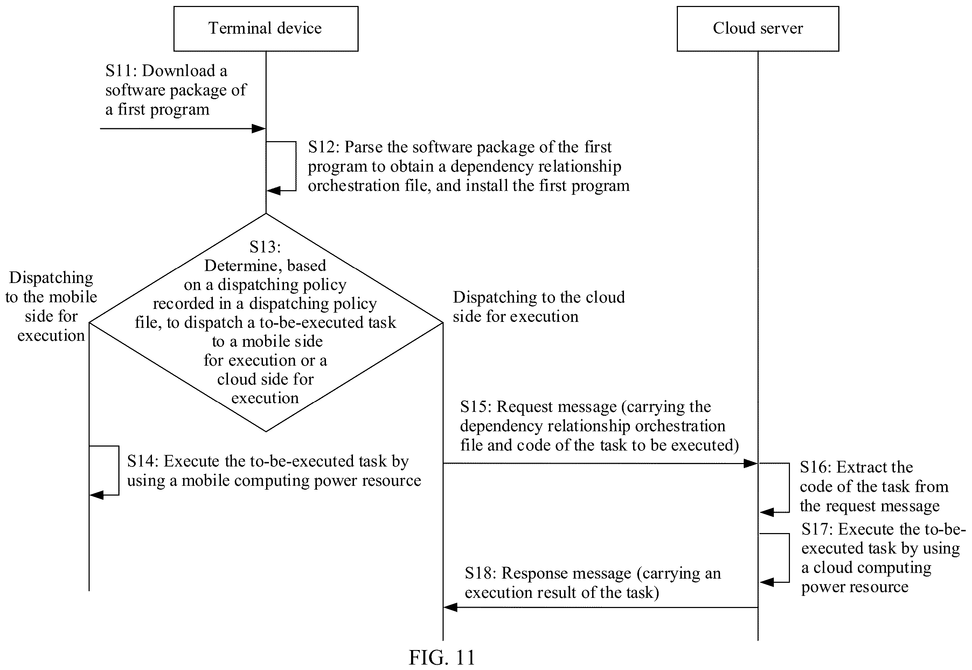

In the mobile-cloud computing power collaborative dispatching system, for functions and executed procedures of the terminal device 20 and the cloud server 30, refer to related content in the subsequent method embodiment in FIG. 11.

As shown in FIG. 5, the terminal device 20 may include a dispatching module 201 and a task execution engine module 203. The cloud server 30 may include an access module 301 and a task dispatching and execution module 303.

As shown in FIG. 5, a key process in the mobile-cloud computing power collaborative dispatching system may include the following steps.
1. The task execution engine module 203 in the terminal device 20 executes a task.
2. When the task is running, the dispatching module 201 in the terminal device 20 determines whether the task is executed on the mobile side or on the cloud side.
3. If the task meets a cloud execution condition, the dispatching module 201 in the terminal device 20 sends the task to the cloud server 30.
4. The access module 301 in the cloud server 30 is responsible for receiving the task from the terminal device 20, and is responsible for load balancing of the task. If the terminal device 20 gains access for the first time, an operating environment is allocated to the terminal device 20. All tasks subsequently received from the terminal device 20 are routed to the previously allocated operating environment.
5. The task dispatching and execution module 303 in the cloud server 30 allocates a cloud resource such as a CPU, an NPU, or a GPU based on a computing power requirement of the task, and executes the task.

The following describes components of the mobile-cloud computing power collaborative dispatching system in detail.

### Dispatching module 201

The dispatching module 201 may include two services: a dispatching policy service and a communication proxy service.

### Dispatching policy service

The dispatching policy service may be used to execute a dispatching policy, and choose to dispatch a task in the first program to the cloud side for execution or the mobile side for execution, or dispatch a part of the task to the mobile side for execution and dispatch another part of the task to the cloud side for execution.

The dispatching policy may be formulated based on but not limited to one or more of the following factors: a task type, power consumption of the terminal device, a temperature of the terminal device, a network status between the terminal device and the server, and a cloud computing power load.

The dispatching policy may be a default dispatching policy or self-defined by a program developer.

In this embodiment of this application, the dispatching policy may include but is not limited to one or more of the following:

### 1. Task type policy

Task dispatching is performed based on a task type. To be specific, a mobile task is chosen to be dispatched to the mobile side for execution, and a cloud task is chosen to be dispatched to the cloud side for execution. A mobile-cloud task may be chosen to be dispatched to the mobile side or the cloud side for execution.

Different task types reflect different computing power requirements. Generally, the program developer declares a light-load task as a mobile task and a heavy-load task as a cloud task. The program developer may alternatively declare a heavy-load task as a mobile-cloud task, and declare a light-load task as a mobile-cloud task.

The program developer may declare a task type of each task in the first program by using the mobile-cloud collaborative programming framework. In the software package of the first program, the machine code of the cloud task and the machine code of the mobile task have respective characteristics. Therefore, the terminal device can identify tasks of different task types. The following describes a data characteristic of the software package of the first program, and details are not described herein.

### 2. Allowlist policy

Allowlist verification is performed, for example, whether a model of the terminal device belongs to a preset model, whether a type of an application program belongs to a preset type, and whether the terminal device is currently in a preset area are verified; and if allowlist verification succeeds, a task is chosen to be dispatched to the cloud side for execution; otherwise, the task is chosen to be dispatched to the mobile side for execution. In some embodiments, a mobile allowlist policy may be applied only to dispatching of the cloud task and the mobile-cloud task. The mobile task may be dispatched to the mobile side for execution based on the task type policy.

### 3. Mobile power consumption policy

In consideration of power consumption of the terminal device, if a remaining battery level of the terminal device is less than a first battery level value, for example, 30%, the mobile-cloud task is chosen to be dispatched to the cloud side for execution, to reduce mobile power consumption. In some embodiments, the mobile power consumption policy may be applied only to dispatching of the mobile-cloud task. Dispatching of the cloud task and the mobile task may be considered based on the task type policy and the like.

### 4. Mobile temperature control policy

In consideration of a temperature of the terminal device, if the temperature of the terminal device is higher than a first temperature value, for example, 38°C, a task is chosen to be dispatched to the cloud side for execution, so as to alleviate a problem that a temperature on the mobile side is excessively high. In some embodiments, the mobile temperature control policy may be applied only to dispatching of the mobile-cloud task. Dispatching of the cloud task and the mobile task may be considered based on the task type policy and the like.

### 5. Network status policy

In consideration of communication quality between the terminal device and the cloud server, if the communication quality is high, a task is chosen to be dispatched to the cloud side for execution; otherwise, the task is chosen to be dispatched to the mobile side for execution. The communication quality may include but is not limited to a bandwidth, a delay, and the like. A standard of high communication quality may include but is not limited to: A communication bandwidth is greater than a first bandwidth (for example, 200 Mbps), and a communication delay is less than a first delay (for example, 1 millisecond). In some embodiments, the network status policy may be applied only to dispatching of the cloud task and the mobile-cloud task. The mobile task may be dispatched to the mobile side for execution based on the task type policy.

### 6. Cloud computing power load policy

In consideration of a cloud computing power load, if the cloud computing power load is lower than a specific ratio, for example, 60%, a task is chosen to be dispatched to the cloud side for execution. Otherwise, the task is chosen to be dispatched to the mobile side for execution. Cloud computing power load = Cloud computing power resource usage/Total cloud computing power resource. In some embodiments, the network status policy may be applied only to dispatching of the cloud task and the mobile-cloud task. The mobile task may be dispatched to the mobile side for execution based on the task type policy.

### 7. Dynamic factor policy

For task dispatching, an available bandwidth between the terminal device and the cloud server is dynamically detected, and whether transmission duration of a task meets a delay requirement of the task is further considered, for example, a delay requirement indicated by a parameter deadline in a method submit(). If the delay requirement is met, the task is chosen to be dispatched to the cloud side for execution. Otherwise, the task is chosen to be dispatched to the mobile side for execution.

Transmission duration of a task may be estimated based on a data packet size of the task and a real-time available bandwidth. A data packet size of a task depends on a size of machine code of the task. In some embodiments, the dynamic factor policy may be applied only to dispatching of the cloud task and the mobile-cloud task. The mobile task may be dispatched to the mobile side for execution based on the task type policy.

By formulating a dispatching policy, factors such as a computing power requirement of each task, mobile power consumption, mobile temperature control, a network status, and a cloud computing power load may be considered to implement task dispatching, so that task dispatching can more flexibly adapt to different scenarios.

Not limited to the foregoing dispatching policy, the program developer may further self-define a dispatching policy based on a service characteristic of a program. For example, a home location of a user number is determined. If the user is an international user, it is determined that the task is not to be executed on the cloud side.

The dispatching policy may be recorded in a dispatching policy file, and the dispatching policy file may be packaged in the software package of the first program. The terminal device may obtain the dispatching policy file after downloading the software package of the first program.

For example, the dispatching policy file (for example, taskDispatchPolicy.json) may record the dispatching policy as follows:

```
         {
         "name": "taskDispatchPolicy",
         "num": 2, //number of policies
         "policy": [
            {"name": "temperaturePolicy", "NO.": "3", "value" : "38+",
         "run": "cloud"
             },
             {"name": "userDefinedPolicy", "NO.": "9", "value" : "appPolicy",
         "run": "cloud"
             }
           ]
         }
```

In the example taskDispatchPolicy.json file, an array policy[] records serial numbers of two dispatching policies "temperaturePolicy" and "userDefinedPolicy" (see assignments of a parameter "NO."), key parameter values (see assignments of a parameter "value"), and dispatching targets (see assignments of a parameter "run").

The dispatching policy "temperaturePolicy" may be the mobile temperature control policy mentioned above. A key parameter value of the dispatching policy is "38+", and a dispatching target thereof is "cloud". This may specifically represent the following dispatching policy: When a mobile temperature is above 38°C, a task is chosen to be dispatched to the cloud side for execution, so as to alleviate a problem of an excessively high mobile temperature.

The dispatching policy "userDefinedPolicy" may be the self-defined policy of the program developer mentioned above. A key parameter of the dispatching policy is a service policy "appPolicy" that is self-defined by the program developer and that is used to determine whether to dispatch a task to the cloud side for execution, and a dispatching target thereof is "cloud", where "appPolicy" may be a character string describing a user-defined service policy. This may specifically indicate the following dispatching policy: determining, based on the user-defined "appPolicy", whether to dispatch a task to the cloud side for execution.

### Communication proxy service

The communication proxy service may be used to establish a communication connection between the terminal device 20 and the cloud server 30, and provide a high-performance and low-latency communication service for dispatching a task to the cloud side for execution.

After the dispatching policy service determines to dispatch a cloud task in the first program to the cloud side for execution, the communication proxy service may send machine code of the cloud task to the cloud server 30 through the communication connection, and request the cloud server 30 to execute the task. The communication proxy service may be further used to receive, through the communication connection, a task execution result returned by the cloud server 30, for example, rendered image data.

Compared with communication using a conventional hypertext transfer protocol (hypertext transfer protocol, HTTP), the communication proxy service is optimized in the following aspects:
1. Protocol optimization: Some fields are added to a protocol header of a computer as a service (Computer As A Service, Caas) protocol. Details may be represented as follows:
   The following fields may be added to a message header of a request message based on the Caas protocol:
   Field "ProjectId": indicates a program development project number, may correspond to a cloud resource number, and is used for cloud tenant isolation.
   Field "AppId": indicates a program number.
   Field "AppVersion": indicates a program version number.
   Field "DeviceId": indicates a device number of a terminal device, and may be a universally unique identifier (universally unique identifier, UUID).
   Field "TaskDAGs": indicates a character string array, and describes a dependency relationship between tasks.

The request message may be sent by the terminal device 20 to the cloud server 30, to request the cloud server 30 to execute a task. A message body of the request message may carry machine code of the task. For example, a message body CaasMsgBody of the request message based on the Caas protocol may include a byte array, and the machine code of the task may be stored in the byte array after being serialized.

The following fields may be added to a message header of a response message based on the Caas protocol:
Field "TaskDAGs": indicates a character string array, and describes a dependency relationship between tasks.
Field "ErrorCode": indicates an error code. A specific value (for example, 0) may indicate success.
Field "ErrorMsg": indicates error description information.

The response message may be sent by the cloud server 30 to the terminal device 20, to feed back an execution result of the task to the terminal device 20. A message body of the response message may carry the execution result of the task. For example, a message body CaasMsgBody of the response message based on the Caas protocol may include a byte array, and the execution result of the task may be stored in the byte array after being serialized.

In the message header of the response message, the field "TaskDAGs" is optional.

2. The communication proxy service may probe an available bandwidth between the terminal device 20 and the cloud server 30, and provide an available bandwidth probed in real time to the dispatching policy service as a determining condition for whether to dispatch a cloud service to the cloud server 30 for execution, for example, the "dynamic factor policy" mentioned above.

3. The communication proxy service may probe a cloud computing power load, and provide a cloud computing power load probed in real time to the dispatching policy service as a determining condition for whether to dispatch a cloud service to the cloud server 30 for execution, for example, the "cloud computing power load policy" mentioned above.

In a specific implementation, the communication proxy service may send a heartbeat message to the cloud server 30 at a period of T, and receive information returned by the cloud server 30, such as a current occupation status of a cloud computing power resource such as an NPU and a GPU, and duration for executing a cloud task in a previous period, so as to estimate a cloud computing power load based on the information, and assist in determining whether a cloud task in a next period can be dispatched to the cloud side for execution.

### Task execution engine module 203

The task execution engine module 203 may be configured to execute a mobile task by using a mobile computing power resource. After determining to dispatch a cloud task or a mobile-cloud task in the first program to the mobile side for execution, the dispatching policy service may further execute the cloud task or the mobile-cloud task by using the mobile computing power resource.

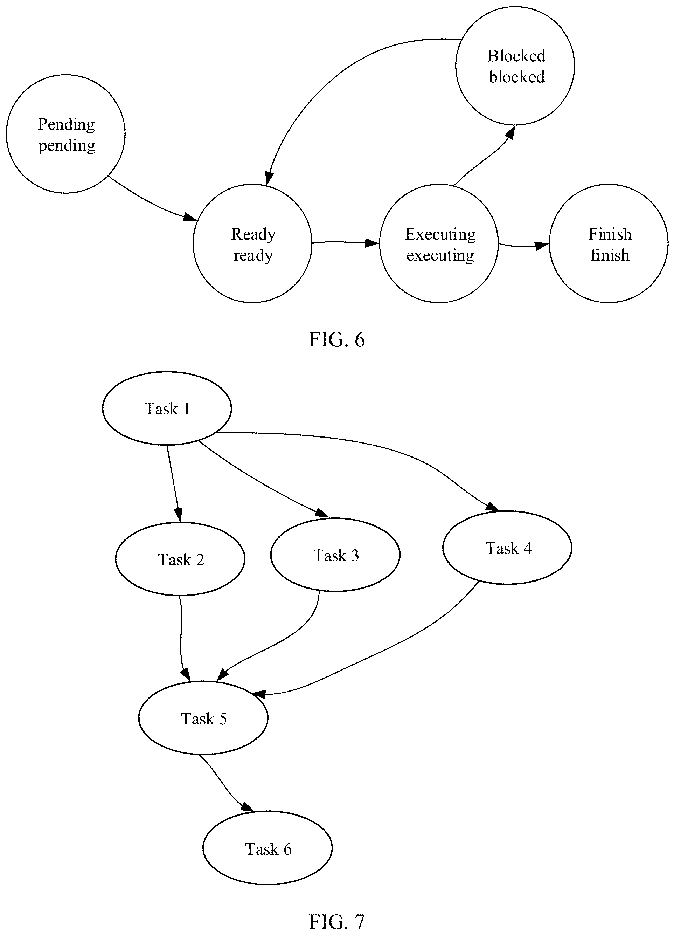

The task execution engine module 203 may be further configured to perform life cycle management on the task when the task in the first program is run, for example, create a task, create a task queue, and manage a task status. For example, as shown in FIG. 6, a task may include the following states in its life cycle: pending (pending), ready (ready), executing (executing), finish (finish), and blocked (blocked). After a task is created, the task enters the pending state. After a running condition is met, the task enters the ready state. The task in the ready state may be dispatched to the mobile side or the cloud side for execution. The task in execution is in the executing state. During task execution, the task may be suspended and is in the blocked state. After running of the task is finished, the task is in the finish state.

The task execution engine module 203 may be further configured to extract a dependency relationship orchestration file from the software package of the first program, so as to provide the dependency relationship between the tasks to the cloud server 30 by using the communication proxy service, so that the cloud server 30 executes the task based on the dependency relationship. In some embodiments, the dependency relationship is not required when the terminal device 20 executes the tasks, because task dispatching on the mobile side is code-level dispatching, and no additional configuration file is required.

In this embodiment of this application, the dependency relationship between the tasks may be used to describe the execution ranks of the tasks, and the input parameter and the output parameter of each task (also referred to as context data of the task). That a task a depends on a task b may be reflected in that an execution rank of the task b is earlier than an execution rank of the task a, and an input parameter of the task a includes an output parameter (an execution result) of the task b.

In an implementation, the dependency relationship orchestration file (for example, taskDAGs.json) may record a dependency relationship between tasks as follows:

```
         {
         "name": "taskDAGs",
         "num": 3,
         "DAGs":[
             {"name": "xxxMobileTask", "type": "MobileTask", seq : "0",
         "in": "xxxx",
         "out" : "yyyyy"
             },
             {"name": "yyyCloudTask", "type": "MobileTask", seq : "1",
         "in": "yyyy",
         "out" : "yyyyy"
             },
             {"name": "zzzMobileCloudTask", "type": "MobileCloudTask", seq : "2",
         "in": "zzzz",
         "out" : "zzzz"
             }
           ]
         }
 
```

In the example taskDAGs.json file, an array DAGs[] records task types (see assignments of a parameter "type"), execution sequences (see assignments of a parameter "seq"), input parameters (see assignments of a parameter "in"), and output parameters (see assignments of a parameter "out") of three tasks "xxxMobileTask", "yyyCloudTask", and "zzzMobileCloudTask".

The execution sequences of the tasks, and the input parameters and the output parameters of the tasks may be used to determine the dependency relationship between the tasks.

In the above example, the execution rank of "xxxMobileTask" is before the execution rank of "yyyCloudTask", the execution rank of "yyyCloudTask" is before the execution rank of "zzzMobileCloudTask", and the input parameter of "yyyCloudTask" is the output parameter of "xxxMobileTask". Therefore, it may be determined that: "zzzMobileCloudTask" depends on "yyyCloudTask", and "yyyCloudTask" depends on "xxxMobileTask".

In some embodiments, to transfer the dependency relationship between the tasks to the cloud server 30, the terminal device 20 may serialize the dependency relationship recorded in the dependency relationship orchestration file (for example, taskDAGs.json) into a byte array, and then place the byte array in a message header of a request message (for example, a task execution request). In this way, after receiving the request message, the cloud server 30 may parse out the dependency relationship from the message header. An example of the dependency relationship placed in the message header may be as follows: taskDAGs : byte [] Codec(in : taskDAGs.json). "Codec(in : taskDAGs.json)" indicates that a dependency relationship orchestration file taskDAGs.json is encoded into a bytecode array.

In another implementation, the dependency relationship orchestration file may record the dependency relationship between the tasks in a graphical manner. For example, as shown in FIG. 7, the dependency relationship may be graphically recorded in a configuration file in a format such as YAML\XML, and may indicate that a task Task6 depends on a task Task5, the task Task5 depends on a task Task2, a task Task3, and a task Task4, and the task Task2, the task Task3, and the task Task4 depend on a task Task1. A possible case of forming the dependency relationship is as follows: An execution rank of Task1 is before execution sequences of Task2, Task3, and Task4, the execution ranks of Task2, Task3, and Task4 are before an execution rank of Task5, and the execution rank of Task5 is before an execution rank of Task6; and an output parameter of Task1 is an input parameter of Task2, Task3, and Task4.

### Access module 301

The access module 301 may be mainly responsible for performing authentication and session negotiation on access by a mobile-side device.

In addition, the access module 301 may be responsible for receiving tasks, aggregating the tasks, and after a dependency relationship between the tasks is prepared, distributing the tasks to the task dispatching and execution module 303 for execution.

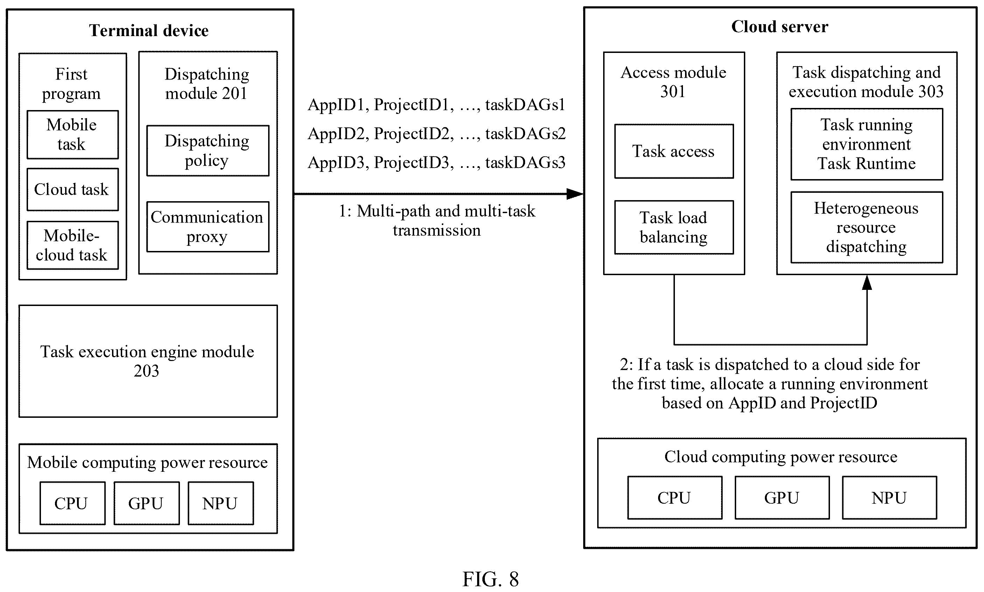

As shown in FIG. 8, the access module 301 may include a task access service and a load balancing service, and may perform the following procedure:

The task access service may be used to: perform authentication on the terminal device 20 when the terminal device 20 gains access for the first time; and after authentication succeeds, allow the terminal device 20 to establish a communication connection to the cloud server, parse a message header of a request message based on protocol specifications and a field definition, and obtain a dependency relationship orchestration file, so as to determine a dependency relationship between tasks.

The task access service may receive a plurality of tasks through a plurality of paths. Tasks from a same program are transmitted through a same path. For example, a task from an APP1 (appID1) is transmitted through a path 1, a task from an APP2 (appID2) is transmitted through a path 2, and a task from an APP3 (appID3) is transmitted through a path 3. Herein, a path may be a session link established based on a session mechanism.

The task access service may aggregate a plurality of received tasks, and convert aggregated tasks into one request message in the cloud server 30, and the request message is dispatched to a task execution environment by using the load balancing service.

The load balancing service may be used to: when a task of a program is dispatched to the cloud side for the first time, trigger the task dispatching and execution module to allocate a running environment to the program based on a program development project number (ProjectID) and a program number (appID), and cache a mapping relationship between a combination of the development project number and the program number and the running environment.

The running environment may include a resource such as a server, a virtual machine, or a Docker container that runs a task. For example, a running environment allocated to one task may be one NPU server, GPU server, or CPU server.

### Task dispatching and execution module 303

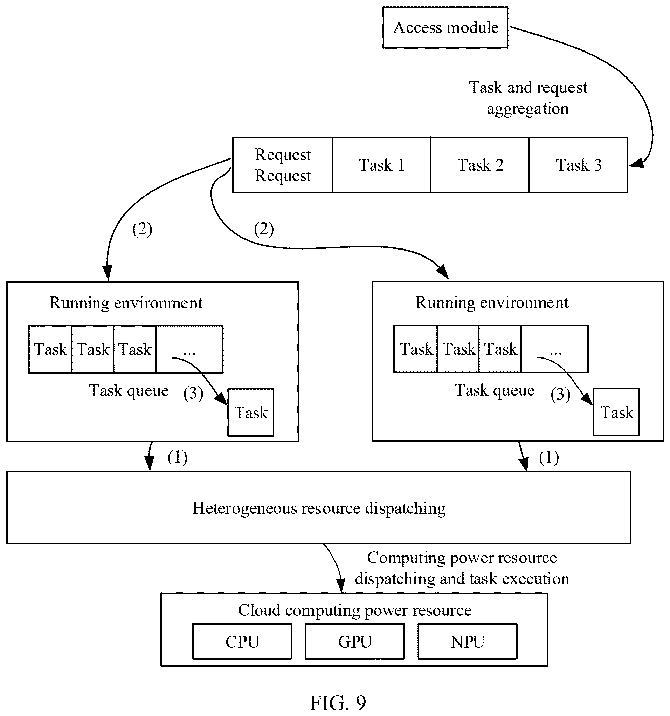

As shown in FIG. 9, the task dispatching and execution module 303 may include two function modules: a task running environment (task runtime) and heterogeneous resource dispatching.

The task running environment (task runtime) may be used to run a task, and may include a task execution engine on the cloud server 30, a driver and a class library corresponding to a cloud computing power resource (such as a GPU or an NPU), and a framework of an AI algorithm, a rendering algorithm, or the like. A task running environment may be a function instance process created on demand, and may process a task execution request of one or more terminal devices based on a computing power load status.

Heterogeneous resource dispatching may be used to dispatch a computing power resource required by a task and implement quick resource dispatching and resource recovery based on distributed dispatching, container pooling, a container cold start acceleration technology (high-speed snapshot cache recovery), and a Fourier statistics model. A reference technical implementation is implemented by using a serverless (Serverless/FaaS) technology.

**To implement mobile-cloud computing power collaborative dispatching, an embodiment of this application provides a mobile-cloud collaborative programming framework.**

As described in the background, currently, a separated dispatching problem of computing powers exists on the terminal device side and the cloud server side, mobile and cloud computing powers cannot be collaborated, and it is unable to dynamically choose to run a program on the mobile side or the cloud side based on factors such as cloud and mobile load statuses. In this case, a program developer usually needs to develop a mobile program and a cloud program, and purchase a cloud computing power resource to deploy the cloud program. Development of the mobile program needs to consider a mobile running environment, and development of the cloud program needs to consider a cloud running environment. The two programs need to be developed and managed separately, resulting in high development and maintenance costs.

By using the mobile-cloud collaborative programming framework provided in embodiments of this application, a program developer can implement computing power collaboration between a mobile side and a cloud side through one-time development, and can flexibly dispatch a task in a program to the cloud side or the mobile side for execution based on factors such as a mobile computing power load, mobile power consumption, mobile temperature control, a network status, and a cloud computing power load, so that a cloud computing power becomes a part of a mobile computing power.

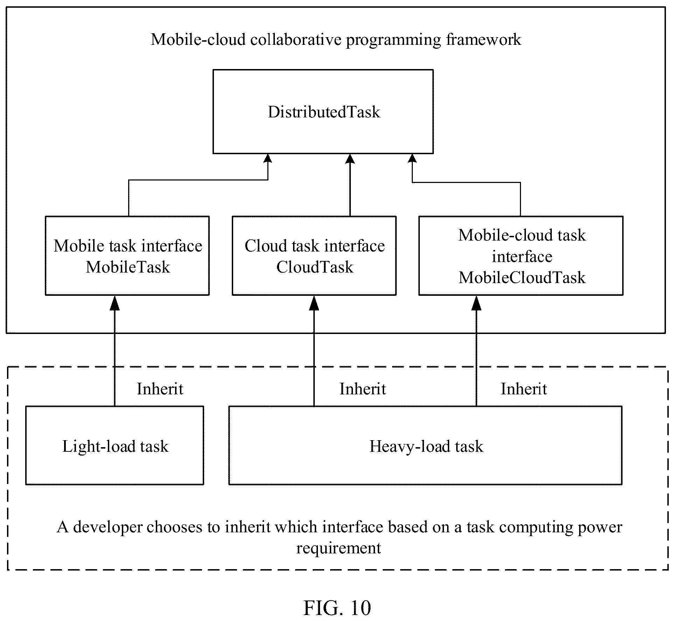

**FIG. 10** **shows a mobile-cloud collaborative programming framework according to an embodiment of this application.**

### Defining a task type

As shown in FIG. 10, the mobile-cloud collaborative programming framework may include interfaces used to declare a task type: "MobileTask" and "CloudTask". The interface "MobileTask" may be used to declare that a task type of a task is a mobile task, and the interface "CloudTask" may be used to declare that a task type of a task is a cloud task.

The interface "MobileTask" and the interface "CloudTask" may inherit a parent interface (parent class) "DistributedTask". The parent interface "DistributedTask" may contain three methods: an initialization method "init()", a task submission and execution method "submit(long deadline)", and an execution result waiting method "wait()".

The interface "MobileTask" may be implemented as follows: abstract MobileTask implements DistributedTask. The interface "MobileTask" implements methods of its parent class: init(), submit(long deadline), and wait(), where the method submit(long deadline) may be specifically used to submit a task to the terminal device side, and the deadline may indicate a mobile submission timeout limit.

The interface "CloudTask" may be implemented as follows: abstract CloudTask implements DistributedTask. The interface "CloudTask" implements methods of its parent class: init(), submit(long deadline), and wait(), where the method submit(long deadline) may be specifically used to submit a task to the cloud server side, and the deadline indicates a cloud submission timeout limit.

In addition to a mobile task and a cloud task, the mobile-cloud collaborative programming framework may further include an interface used to declare a task type of a mobile-cloud task: "MobileCloudTask".

A program developer may choose to inherit a task from MobileTask, CloudTask, or MobileCloudTask based on an actual computing power requirement of each task in a program, and implement the corresponding interfaces init(), submit(long deadline), and wait().

For example, code logic used to implement a light-load rendering mobile task "renderAMobileTask" may be as follows:

```
         renderAMobileTask extends MobileTask {
                 init()
                 {
                  }
                 wait()
                 {
                  }
                 renderA()
                 {
                  }
          }
```

In the above example, the task "renderAMobileTask" inherits the MobileTask, implements mobile resource initialization in the method init(), and implements a mobile task waiting mechanism in the method wait(). In this way, the task "renderAMobileTask" is declared and defined as a mobile task. Code logic of the task "renderAMobileTask" may further include code logic of the task used to implement a rendering function, for example, renderA(). renderA() has a low computing power requirement. Therefore, a task of renderA() may be designed as a mobile task.

For example, code logic of a cloud task "reflectionCloudTask" used to implement light tracking may be as follows:

```
         reflectionCloudTask extends CloudTask {
                 init()
                 {
                 wait()
                 {
                reflection()
                 {
                  }
         }
```

In the above example, the task "reflectionCloudTask" inherits the CloudTask, implements cloud resource initialization (including initializing mobile-cloud communication) in the method init(), and implements a cloud task timeout mechanism in the method wait(). In this way, the task "reflectionCloudTask" is declared and defined as a cloud task. The code logic of the task "reflectionCloudTask" may further include code logic of the task used to implement a light tracking rendering function, for example, reflection(). reflection() has a high computing power requirement. Therefore, a task of reflection() may be designed as a cloud task.

The mobile-cloud collaborative programming framework may further include a child interface (child class) "MobileCloudTask" that inherits a parent interface (parent class) "DistributedTask". "MobileCloudTask" defines an interface of a task that can be executed on the mobile side or the cloud side (that is, a mobile-cloud task), and may be implemented as follows: abstract MobileCloudTask implements DistributedTask. "MobileCloudTask" implements methods of its parent class: init(), submit(long deadline), and wait(), where the method submit(long deadline) may be specifically used to submit a task to the cloud server side or the mobile side, and the deadline indicates a submission timeout limit.

For example, code logic of a mobile-cloud task "calculateMobileCloudTask" may be as follows:

```
         calculateMobileCloudTask extends MobileCloudTask
         {
                 init()
                 {
                  }
                 wait()
                 {
                  }
         calculate()
                 {
                  }
         }
```

In the above example, the task "calculateMobileCloudTask" inherits the MobileCloudTask task, implements mobile resource initialization and cloud resource initialization (including initializing mobile-cloud communication) in the method init(), and implements a cloud or mobile task timeout mechanism in the method wait() based on actual execution on the cloud side or the mobile side. In this way, the task "calculateMobileCloudTask" is declared and defined as a mobile-cloud task. The code logic of the task "calculateMobileCloudTask" may further include code logic of a function of the task, for example, calculate(). A computing power requirement of calculate() may be met by the mobile computing power resource or the cloud computing power resource. Therefore, a task of calculate() may be designed as a mobile-cloud task.

### Defining a dispatching policy

In addition to the task type, the mobile-cloud collaborative programming framework may further support the program developer in self-defining the dispatching policy. The mobile-cloud collaborative programming framework may further include a dispatching policy interface, for example, "TaskDispatchPolicy".

The parent interface "TaskDispatchPolicy" may contain the following method: an interface int policy(string policyExpress). An input parameter "policyExpress" of the method is used to receive a self-defined dispatching policy. A returned result of the method may include "0" and "1", where "0" may be defined as execution on the cloud side, and "1" may be defined as execution on the mobile side.

The program developer may self-define the dispatching policy, for example, self-define an interface appPolicy to implement a dispatching policy interface "TaskDispatchPolicy" and a method int policy(string policyExpress). The input parameter "policyExpress" thereof is the self-defined dispatching policy.

The dispatching policy may be recorded in a dispatching policy file (for example, taskDispatchPolicy.json). When the terminal device runs an application program, the terminal device may read the dispatching policy in the file, and execute task dispatching according to the dispatching policy. The file may be packaged in a software package of the application program. The terminal device may obtain the file after downloading the software package of the application program.

According to the mobile-cloud collaborative programming framework provided in this embodiment of this application, the program developer may dispatch a task to the mobile side or the cloud side for execution as required by using an interface provided by the framework, to implement one-time development and a capability of running on the mobile side or the cloud side, thereby significantly improving program development efficiency and shielding a difference between running environments on the mobile side and the cloud side.

**FIG. 11** **shows an example of an overall procedure of a mobile-cloud computing power collaborative dispatching method according to an embodiment of this application.** The method may be applied to a mobile-cloud computing power collaborative dispatching system including a terminal device 20 and a cloud server 30. As shown in FIG. 11, the method may include the following procedure.

S11: The terminal device 20 downloads a software package of a first program.

The first program may be developed by a program developer based on a mobile-cloud collaborative programming framework. The first program may be a photographing application program, a game application program, or the like. A type of the first program and a function provided by the first program are not limited in this embodiment of this application. The first program may be divided into a plurality of tasks. Task types of the tasks may include a cloud task and a mobile task. The mobile task may be a task dispatched to the terminal device 20 for execution, and the cloud task may be a task dispatched to the cloud server 30 for execution. The task types of the tasks may further include a mobile-cloud task. The mobile-cloud task may be dispatched to the terminal device 20 for execution, or may be dispatched to the cloud server 30 for execution.

When compiling the first program, the program developer may declare a task having a high computing power requirement as a cloud task, and declare a task having a low computing power requirement as a mobile task.

The software package of the first program may include program code and a dependency relationship orchestration file (for example, taskDAGs.json).

Program code of the first program may include code of a mobile task and code of a cloud task. Herein, the code may be machine code (or byte code). The machine code (machine code) is generated after source code is compiled, and may be directly read and executed by a processor at a high execution speed.

In the software package of the first program, the code of the cloud task and the code of the mobile task have respective characteristics: The code of the mobile task may include a first code segment, and the first code segment may be a segment of machine code converted from source code (for example, "extends MobileTask") used to declare that a task type is a mobile task. The code of the cloud task may include a second code segment, and the second code segment may be a segment of machine code converted from source code (for example, "extends CloudTask") used to declare that a task type is a cloud task. Therefore, the terminal device may identify a task type based on machine code of a task. The following describes a data characteristic of the software package of the first program, and details are not described herein.

The program code of the first program may further include code of a mobile-cloud task. The code of the mobile-cloud task may include a third code segment, and the third code segment may be a segment of machine code converted from source code (for example, "extends MobileCloudTask") used to declare that a task type is a mobile-cloud task.

The dependency relationship orchestration file may indicate a dependency relationship between tasks in the first program. For specific description of this file, refer to the foregoing description. Details are not described herein again.

The program code of the first program may further include a dispatching policy file (for example, taskDispatchPolicy.json), and the dispatching policy file may be used to record a dispatching policy based on which the terminal device performs task dispatching. For specific description of this file, refer to the foregoing description. Details are not described herein again. In some embodiments, the dispatching policy may not be recorded in the dispatching policy file, but is reflected in code logic of a dispatching module. For example, the dispatching module may implement the following dispatching policy based on the code logic of the dispatching module: dispatching a task based on a task type, which is specifically dispatching a cloud task to a cloud side for execution, and dispatching a mobile task to a mobile side for execution.

Downloading is only one manner in which the terminal device 20 obtains the software package of the first program. Not limited thereto, the terminal device 20 may further obtain the software package of the first program from another device in a communication manner such as Bluetooth, a data line, or satellite communication, or may obtain the software package of the first program by reading an external memory. A manner in which the terminal device 20 obtains the software package of the first program is not limited in this embodiment of this application.

S12: After obtaining the software package of the first program, the terminal device 20 may parse the software package of the first program to obtain a dependency relationship orchestration file, and install the first program.

A dependency relationship between tasks recorded in the dependency relationship orchestration file may be sent to the cloud server 30, so that the cloud server 30 executes the task accordingly. The dispatching policy file may be used by the terminal device 20 to determine how to dispatch a task in the first program. Details are described in the following content and are not described herein.

Alternatively, the first program may be a program pre-installed when the terminal device 20 is delivered from a factory. In this case, S11 and S12 are optional steps. The terminal device 20 may obtain the dependency relationship orchestration file and the dispatching policy file from an installation directory of the first program.

S13: Before executing a to-be-executed task in the first program, the terminal device 20 may determine, based on the dispatching policy, to dispatch the to-be-executed task to a mobile side for execution or a cloud side for execution. If it is determined that the to-be-executed task is dispatched to the mobile side for execution, the terminal device 20 may perform S14. If it is determined that the to-be-executed task is dispatched to the cloud side for execution, the terminal device 20 may perform S15 to S18.

The to-be-executed task may be a task to be executed as triggered by a user operation. For example, for a photographing program, a to-be-executed task triggered by a user operation of pressing a shutter is a photo capture task, and the task is used to save an image collected at a shutter moment as a photo. The to-be-executed task may alternatively be a task to be executed as triggered by the first program based on running logic of the first program.

The dispatching policy may include but is not limited to one or more of the following: a "task type policy", a "mobile power consumption policy", a "mobile temperature control policy", a "network status policy", a "cloud computing power load policy", and the like.

For example, if the dispatching policy is the "task type policy", the terminal device 20 may select, based on a task type of a task, whether to dispatch the task to the mobile side or the cloud side. When a task is a mobile task, the task may be chosen to be dispatched to the mobile side for execution. When a task is a cloud task, the task may be chosen to be dispatched to the cloud side for execution. When a task is a mobile-cloud task, the task may be chosen to be dispatched to the cloud side or the mobile side for execution.

For specific description of the dispatching policy, refer to the foregoing description. Details are not described herein again.

S14: The terminal device 20 executes the to-be-executed task by using a mobile computing power resource.

S15: The terminal device 20 sends a request message to the cloud server 30, to request the cloud server 30 to execute the to-be-executed task. Correspondingly, the cloud server 30 may receive the request message sent by the terminal device 20.

The request message may include a message header and a message body. The message header may carry the dependency relationship orchestration file, and the message body may carry machine code of the to-be-executed task. The dependency relationship orchestration file may be serialized into a byte array and then placed in the message header of the request message. The machine code of the to-be-executed task may be organized into a binary file, for example, a .so file. The message body may be a byte array, which may be used to store a file (such as a .so file) serialized into a byte array.

The request message may further carry an input parameter of the to-be-executed task. The input parameter may be specifically stored in the message body. An input parameter of a task may be an output parameter (for example, an execution result) of another task on which the task depends. Assuming that a task a is an image rendering task, an input parameter of the task a may be a RAW image collected by a camera, and may be an output parameter of an image capture task on which the task a depends. The input parameter of the task a may be encoded into a byte array and then stored in a message body of a request message, so as to be sent to the cloud server 30 for rendering processing.

For descriptions of the message header and the message body of the request message, refer to the foregoing description. Details are not described herein again.

In some embodiments, during session duration between the cloud server 30 and the terminal device 20, the cloud server 30 may store the received dependency relationship orchestration file and the received code of the task.

In this way, during the session, for the first program, if the dependency relationship orchestration file of the first program has been transmitted to the cloud server 30, if a subsequent task of the terminal device is dispatched to the cloud side for execution, the dependency relationship orchestration file no longer needs to be transferred in the message header of the request message, so as to save a network resource. To be specific, during the session, the dependency relationship orchestration file may be transferred by using the request message only when a task in the first program needs to be dispatched to the cloud side for execution for the first time.

In this way, during the session, for a task, if code of the task has been transmitted to the cloud server 30, if the terminal device subsequently dispatches the task to the cloud side for execution again, the code of the task no longer needs to be transferred in the message body of the request message, so as to save a network resource. To be specific, during the session, code that depends on a task may be transferred by using the request message only when the task is dispatched to the cloud side for execution for the first time.

S16: The cloud server 30 may extract code of the task from the request message.

In some embodiments, if the request message carries the dependency relationship orchestration file, the cloud server 30 may further extract the dependency relationship orchestration file from the request message.

S17: Based on the code of the task, the cloud server 30 executes the task by using a cloud computing power resource.

Specifically, a cloud computing power resource such as a CPU, an NPU, or a GPU is allocated based on a computing power requirement of the task, and the task is executed. The computing power requirement of the task may be determined based on a task type of the task. Specifically, if a task is declared as a mobile task, it indicates that a computing power requirement of the task is low; or if a task is declared as a cloud task, it indicates that a computing power requirement of the task is high.

If the terminal device 20 gains access for the first time, an operating environment is allocated to the terminal device 20. All tasks subsequently received from the terminal device 20 are routed to the previously allocated operating environment.

S18: The cloud server 30 returns a response message to the terminal device 20, to feed back an execution result of the task to the terminal device 20. Correspondingly, the terminal device 20 may receive the response message sent by the cloud server 30, and may extract the execution result of the task from the response message.

The response message may include a message header and a message body. The message header may carry the dependency relationship orchestration file, and the message body may carry the execution result of the task. The dependency relationship orchestration file may be serialized into a byte array and then placed in the message header of the response message. The message body may be a byte array, which may be used to store an execution result of a task serialized into a byte array.

An execution result of a task may be an input parameter of another task that depends on the task. Assuming that a task a is an image rendering task, an execution result of the task a may be a rendered picture. The rendered picture may be encoded into a byte array and then stored in a message body of a response message, to be fed back to the terminal device 20. The terminal device 20 may use the rendered picture as an input parameter of a display task, to display the rendered picture. The display task depends on the task a.

For descriptions of the message header and the message body of the response message, refer to the foregoing description. Details are not described herein again.

In this embodiment of this application, the cloud server 30 may receive a plurality of request messages sent by the terminal device 20. The plurality of request messages are respectively used to request the cloud server 30 to execute a plurality of different tasks. After receiving the plurality of request messages, the cloud server 30 may restore execution sequences of the plurality of tasks based on the dependency relationship orchestration file, and cache the plurality of tasks into a task queue based on task execution sequences described in the dependency relationship orchestration file, so as to record the execution ranks of the plurality of tasks. In this way, when the cloud server 30 needs to run these tasks, the cloud server 30 may sequentially extract the tasks from the task queue and execute the tasks, so as to ensure that the task execution sequences are correct.

According to the mobile-cloud collaborative computing power dispatching method provided in this embodiment of this application, a cloud computing power can become a part of a mobile computing power, implementing collaborative dispatching of mobile and cloud tasks. This solves a problem of an insufficient mobile computing power and avoids an idle mobile computing power and high costs on the cloud side that are caused by placing all logic and computing powers on the cloud side. In addition, the task dispatching policy may be self-defined by a program developer. In addition to a computing power requirement of each task, factors such as mobile power consumption, mobile temperature control, a network status, and a cloud computing power load may be considered to implement task dispatching, so that task dispatching can more flexibly adapt to different scenarios.

An embodiment of this application further provides a transmission rate adjustment method, so as to optimize mobile-cloud communication, effectively increase a mobile-cloud communication bandwidth, and further reduce a task transmission delay, so that more tasks that meet a condition can be dispatched to a cloud side for execution.

Existing network transmission problems are as follows: An initial rate of an HTTP network transmission protocol increases slowly. Wide area network transmission faces a complex weak network environment (such as a random packet loss, an RTT jitter, and bandwidth fluctuation). The existing HTTP transmission protocol is prone to cause large fluctuation and a small value in evaluation of an available bandwidth in a case of a weak network signal (a signal indicating a poor network condition), resulting in low transmission efficiency (network bandwidth utilization < 40%).

A communication method provided in an embodiment of this application can provide optimization effects in the following aspects:
1. Network QoS dispatching experienced and sensed by a user: Different requirements (such as a deadline delay and a task priority) on access data and processing time of different tasks are detected, and network QoS requirements converted from experience requirements are accurately transferred through an end-too-end full path.
2. Transmission optimization: Fast start and anti-weak network precise bandwidth evaluation ensure high bandwidth usage > 80% in wide area network communication. A real-time network environment (such as a bandwidth change, a packet loss, and a jitter) of a wide area network is automatically learned, and various types of network loss interference of an access network are resisted. A packet loss rate > 3% ensures bandwidth usage > 80%. Multi-path transmission solves a problem of an insufficient bandwidth or poor network quality on a single path. Different tasks run on different paths. A transmission protocol obtains a maximum available bandwidth through proactive probing and reports the bandwidth to a dispatching module.

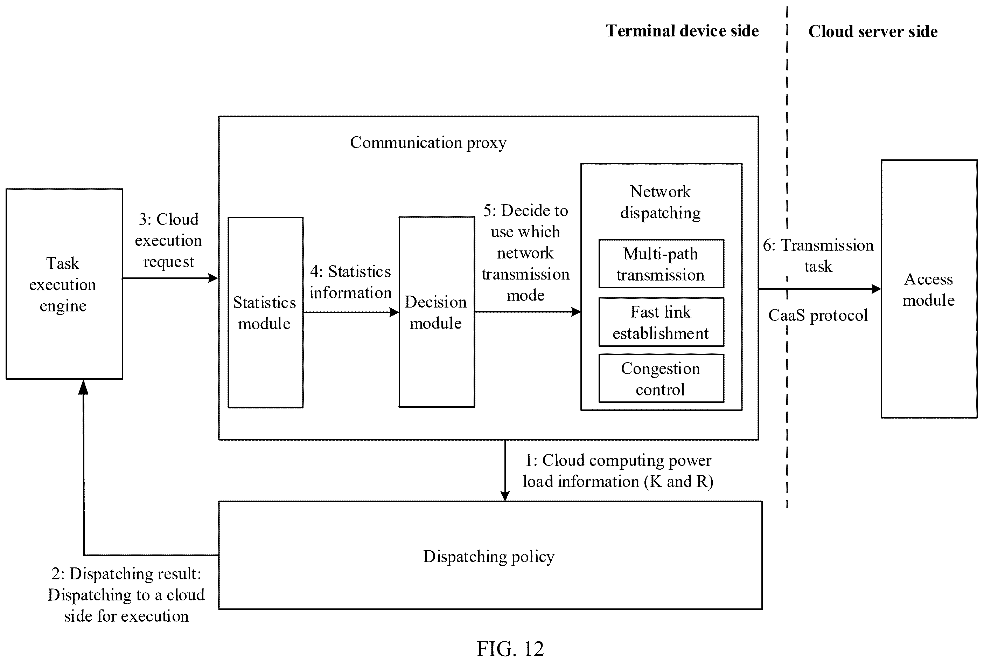

As shown in FIG. 12, a communication proxy service on a terminal device may further include: a statistics module, a decision module, and a network dispatching module. The statistics module may be configured to create a network statistics model for a task based on identification information (for example, a task ID) of the task, collect statistics on a data packet size of the task, a maximum delay of the task, a transmission time (that is, transmission duration) of the task, and the like, and determine, based on a historical transmission rate and a current available bandwidth, an available upload network bandwidth K to be allocated to the task in a next period and network bandwidth usage R. The decision module may be configured to determine, based on information such as a data packet size, a maximum delay of a task, and a transmission time (that is, transmission duration) of the task, to use which transmission manner, whether to unpack the task, and the like, and notify the network dispatching module of a decision result. The network dispatching module may be configured to allocate and adjust a network bandwidth for the task based on a delay requirement of the task, the data packet size of the task, an available network bandwidth, and the like.

Specifically, transmission rate adjustment provided in this embodiment of this application may include S21 and S22. Details are provided below.

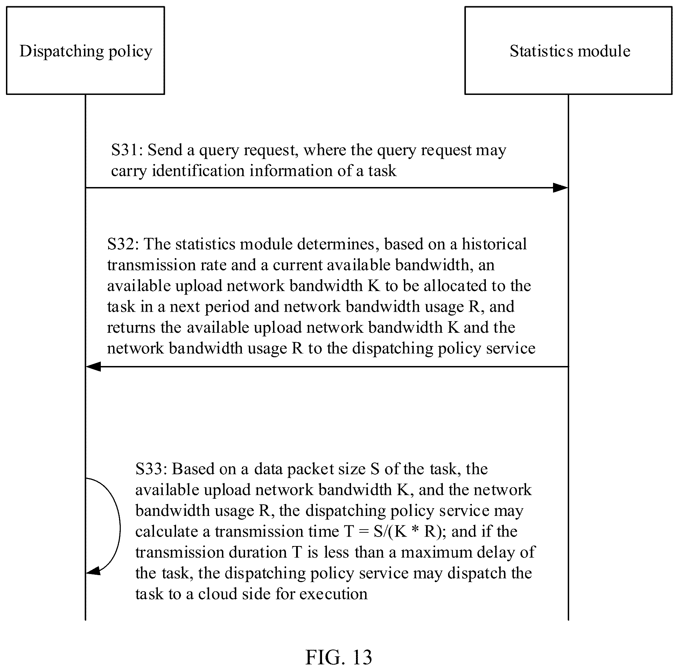

S21: The communication proxy service provides cloud computing power load information for the dispatching policy service, so that the dispatching policy service evaluates a current network status and determines whether to dispatch a task to the cloud side for execution. A specific implementation process thereof may include S31 to S33, as shown in FIG. 13.

S31: The dispatching policy service may send a query request to the statistics module, where the query request may carry identification information of a task, so as to query an available upload network bandwidth to be allocated to the task in a next period and network bandwidth usage.

S32: The statistics module may determine, based on a historical transmission rate and a current available bandwidth, an available upload network bandwidth K to be allocated to the task in a next period and network bandwidth usage R, and return the available upload network bandwidth K and the network bandwidth usage R to the dispatching policy service.

S33: Based on a data packet size S of the task, the available upload network bandwidth K, and the network bandwidth usage R, the dispatching policy service may calculate the transmission time T = S/(K * R). If the transmission duration T is less than the maximum delay of the task, the dispatching policy service may dispatch the task to the cloud side for execution. The maximum delay of the task is a maximum delay that can be tolerated by the task, and reflects a delay requirement of the task.

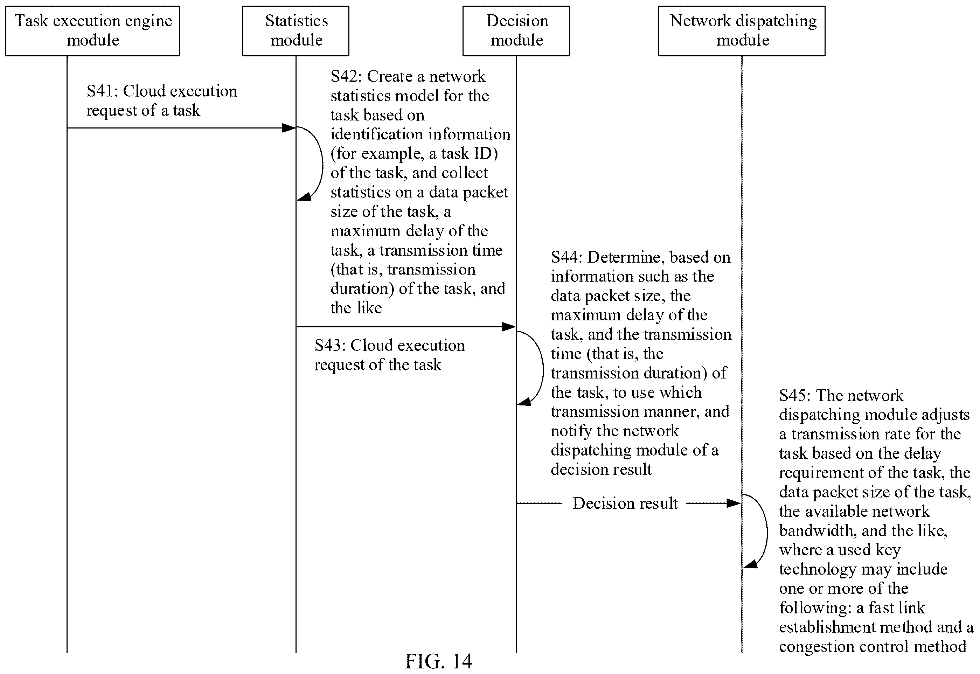

S22: Provide a high-performance and reliable protocol transmission framework for a task execution engine module on a mobile side. A specific implementation procedure of the frame is shown in FIG. 14, and may include S41 to S45.

S41: The task execution engine module transmits a cloud execution request of a task to the statistics module.

S42: The statistics module creates a network statistics model for the task based on identification information (for example, a task ID) of the task, and may collect statistics on a data packet size of the task, a maximum delay of the task, a transmission time (that is, transmission duration) of the task, and the like.

S43: The statistics module may further transmit the cloud execution request of the task to the decision module, where the request may carry information such as the data packet size of the task, the maximum delay of the task, and the transmission time (that is, the transmission duration) of the task.

S44: The decision module may determine, based on information such as the data packet size, the maximum delay of the task, and the transmission time (that is, the transmission duration) of the task, to use which transmission manner, whether to unpack the task, and the like, and notify the network dispatching module of a decision result.

S45: The network dispatching module adjusts a transmission rate for the task based on the delay requirement of the task, the data packet size of the task, the available network bandwidth, and the like, where a used key technology may include one or more of the following:

### Fast link establishment method

An existing transmission protocol has a low start rate, and needs to undergo a slow start process to perform slow rate ramping, which is not conducive to reducing a network transmission delay. The fast link establishment method provided in this embodiment of this application can resolve this problem. A core idea of the fast link establishment method includes: using a specified high rate (based on a service expectation or historical connection cache information) as a test rate of a first round trip time (round trip time, RTT), and completing initial rate calculation within one RTT based on a network feedback.

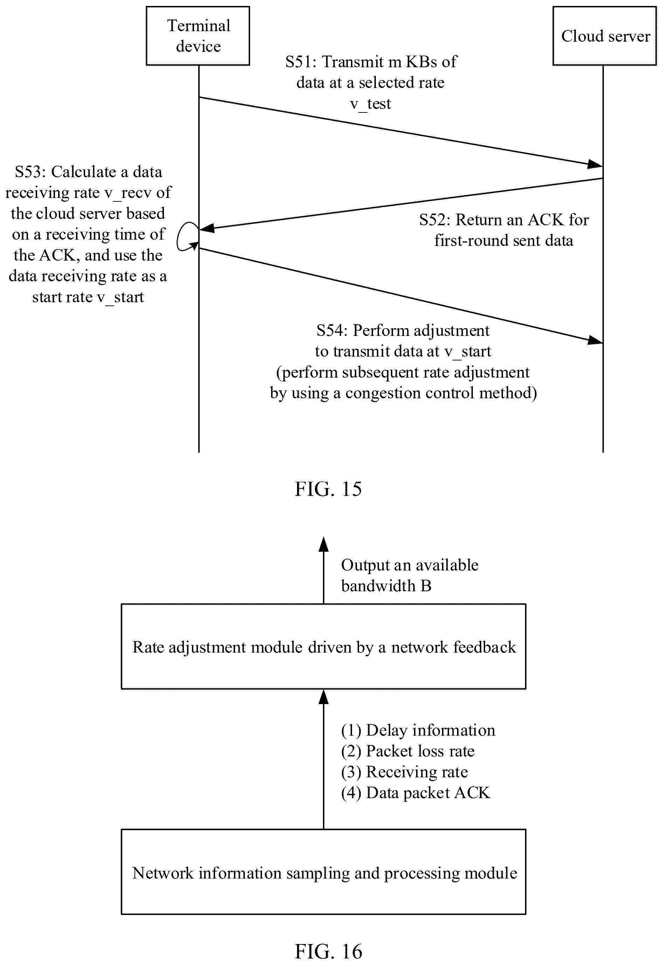

Specifically, as shown in FIG. 15, the fast link establishment method provided in this embodiment of this application may include the following steps.

S51: At the beginning of transmitting a data packet of a task (mainly including code of the task and context data) to the cloud server (for example, the first RRT for transmission of the data packet), the terminal device transmits data at a test rate (a selected rate) v_test.

v_test is a large transmission rate, and its value is greater than v_start mentioned later.

In some embodiments, a test rate v_test selected for a task may be determined based on a service expectation: v_test = data_size/Tmax, where data_size represents a data packet size of the task, and Tmax represents a maximum delay of the task. Specifically, the mobile-cloud collaborative programming framework may provide an interface, and a program developer may configure a latency requirement of each task by implementing the interface.

In some embodiments, a test rate v_test selected for a task is also determined based on historical cache information. Herein, the historical cache information may be a test rate that has been selected for a historically transmitted task.

S52: The terminal device receives an acknowledgment (acknowledgment, ACK) returned by the cloud server for first-round sent data.

S53: The terminal device estimates a data receiving rate v_recv of the cloud server based on a receiving time of the acknowledgment (ACK), and uses the data receiving rate v_recv as a start rate v_start for subsequent data transmission.

Specifically, the data receiving rate v_recv may be estimated as follows: v_recv = m/Δt, where m represents a data volume of the first-round sent data, for example, m KBs, and m is a positive integer; and Δt = t2 - t1, where t1 represents a start transmission time of the first-round sent data, and t2 represents the receiving time of the ACK for the first-round sent data. That is, v_start = m/Δt.

If the ACK has been returned to the terminal device before sending of the first-round sent data (m KBs) is completed, the terminal device may stop sending in advance a remaining part of the first-round sent data by using v_test. In this way, the transmission rate can be adjusted to v_start earlier, and the network can be adapted more quickly.

If the terminal device does not receive the ACK after sending of the first-round sent data (m KBs) is completed, the terminal device may stop sending subsequent data and wait for the ACK to be returned. In this way, problems such as network congestion and a packet loss can be avoided.

S54: The terminal device adjusts the transmission rate to the start rate v_start.

Rate adjustment for subsequent data transmission may be performed by using a congestion control method. Specifically, the terminal device may adjust the transmission rate by using a congestion control algorithm starting from second RTT.

### Congestion control method

As shown in FIG. 16, an existing congestion control method may include: based on information such as delay information, a packet loss rate, a receiving rate, and a data packet ACK that are sent by a network information sampling and processing module, a rate adjustment module driven by a network feedback may determine an available bandwidth B, to indicate a service rate to perform transmission based on the available bandwidth B.

However, wide area network transmission faces a complex weak network environment (such as a random packet loss, an RTT jitter, and bandwidth fluctuation). A weak network signal is prone to occur and cannot accurately reflect an actual network status. The existing congestion control method in FIG. 16 causes large fluctuation and a small value in evaluation of the available bandwidth B, and consequently causes a problem of low transmission efficiency.

According to the congestion control method provided in this embodiment of this application, this problem can be resolved. A weak network identification and information correction module is newly introduced to resist interference from weak network noise of a wide area network, and a congestion control module with traffic characteristic sensing is introduced to adjust a rate in time based on a traffic characteristic of an application program, thereby ensuring transmission efficiency.

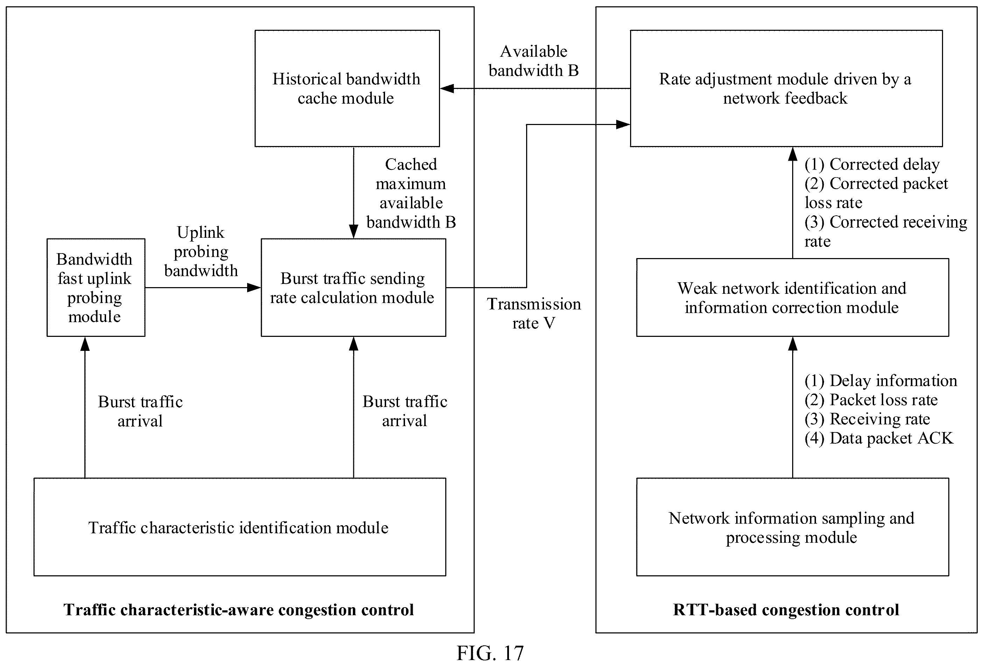

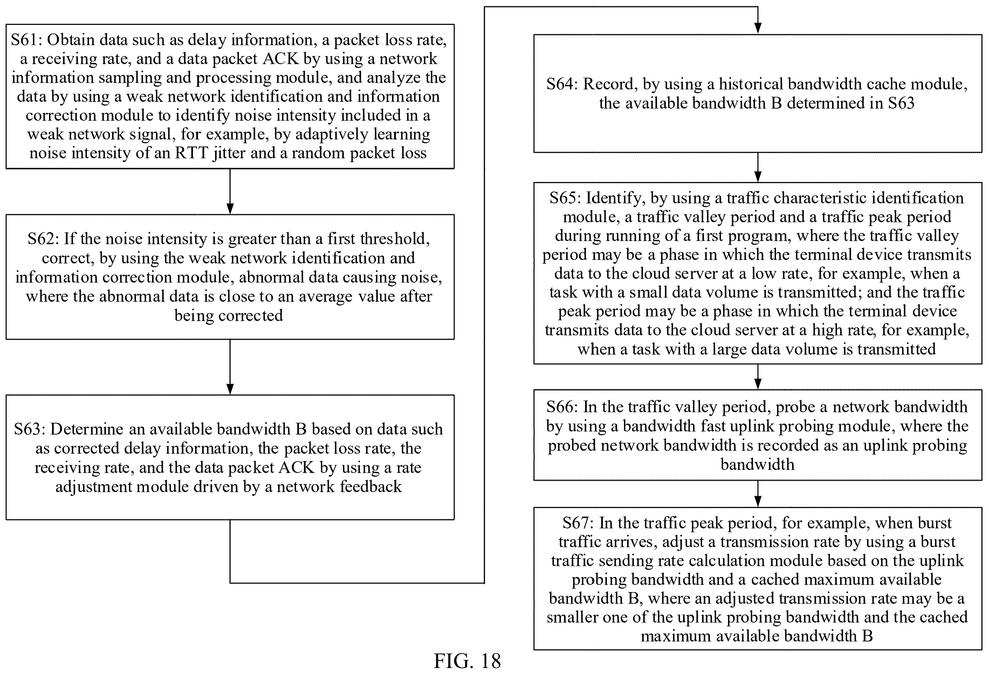

Specifically, as shown in FIG. 17 and FIG. 18, the fast link establishment method provided in this embodiment of this application may include the following steps.

### RTT-based congestion control (S61 to S63)

S61: A terminal device may obtain data such as delay information, a packet loss rate, a receiving rate, and a data packet ACK by using a network information sampling and processing module, and may analyze the data by using a weak network identification and information correction module to identify noise intensity included in a weak network signal, for example, by adaptively and dynamically learning noise intensity of an RTT jitter and a random packet loss. Greater noise intensity indicates that a conclusion of a weak network signal is less reliable. In this case, correction is required to make output of an available bandwidth B closer to an actual network status. For example, if only one or two data packets are lost during transmission of 100 consecutive data packets, noise intensity of the lost data packet is high, and cannot reflect that the network status is poor. For another example, if RTT of only one data packet during transmission of 100 consecutive data packets is abnormally large, the RTT jitter cannot reflect that the network status is poor.

S62: If the noise intensity is greater than a first threshold, the terminal device may correct, by using the weak network identification and information correction module, abnormal data causing noise, where the abnormal data is close to an average value after being corrected.

S63: The terminal device may determine an available bandwidth B based on data such as corrected delay information, the packet loss rate, the receiving rate, and the data packet ACK by using a rate adjustment module driven by a network feedback.

### Traffic characteristic-aware congestion control (S64 to S67)

S64: The terminal device may record, by using a historical bandwidth cache module, the available bandwidth B determined in S63.

S65: The terminal device may identify, by using a traffic characteristic identification module, a traffic valley period and a traffic peak period during running of a first program.

The traffic valley period may be a phase in which the terminal device transmits data to the cloud server at a low rate, for example, when a task with a small data volume is transmitted. The traffic peak period may be a phase in which the terminal device transmits data to the cloud server at a high rate, for example, when a task with a large data volume is transmitted. In other words, the traffic valley period may be a phase in which the terminal device transmits code of a first task to the server, and a data volume of the code of the first task is greater than a first data volume. The traffic peak period is a phase in which the terminal device transmits code of a second task to the server, a data volume of the code of the second task is less than a second data volume, and the second data volume is less than or equal to the first data volume.

In some embodiments, the terminal device may traverse data volumes of task code in the first program, determine a transmission period of task code with a large data volume as a traffic peak period, and determine a transmission period of task code with a small data volume as a traffic valley period. In some other embodiments, the mobile-cloud collaborative programming framework may provide an interface. The program developer may write a data volume of each task into a specified variable or execution storage area by implementing the interface. In this way, once the terminal device reads the data volume of each task from the specified variable or execution storage area, the terminal device can determine which tasks are transmitted in a traffic valley period.

S66: In the traffic valley period, the terminal device may probe a network bandwidth by using a bandwidth fast uplink probing module, where the probed network bandwidth is recorded as an uplink probing bandwidth.

Specifically, the terminal device may pad low-rate data with patch data (for example, data "0" or other data) to form high-rate data transmission. If a timely network feedback is obtained, the padding is further increased until the network feedback times out, and a highest rate at which the timely network feedback is obtained may be determined as the uplink probing bandwidth. This process may also be referred to as a process of "probing an uplink network bandwidth".

S67: In the traffic peak period, for example, when burst traffic arrives, the terminal device may adjust a transmission rate by using a burst traffic sending rate calculation module based on the uplink probing bandwidth and a cached maximum available bandwidth B (which may also be referred to as a historical maximum available bandwidth), where an adjusted transmission rate may be a smaller one of the uplink probing bandwidth and the cached maximum available bandwidth B.

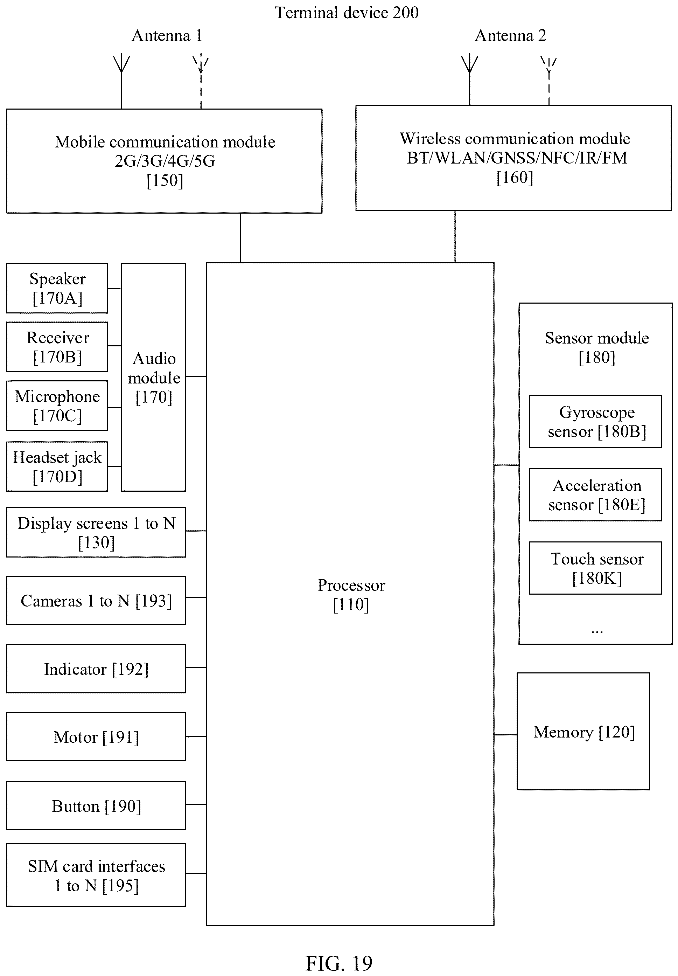

**FIG. 19** shows a **terminal** device **200 according to an embodiment of this application.**

In this embodiment of this application, a device type of the terminal device 200 may be any one of: a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device such as a large screen or a smart speaker, a wearable device such as a smart band, a smart watch, or smart glasses, an extended reality (extended reality, XR) device such as augmented reality (augmented reality, AR), virtual reality (virtual reality, VR), or mixed reality (mixed reality, MR),an in-vehicle device, a smart city device, or the like.

As shown in FIG. 19, the terminal device 200 may include: a processor 110, a memory 120, a display screen 130, a display driver integrated circuit (display driver integrated circuit, DDIC), an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a subscriber identity module (subscriber identity module, SIM) card interface 195, and the like. The sensor module 180 may include a gyroscope sensor 180B, an acceleration sensor 180E, a touch sensor 180K, and the like. Components in the terminal device 200 may be connected to each other by using a bus.

There may be one or more processors 110, and the processors 110 may be integrated into an integrated circuit of a system on chip (system on chip, SOC). The SoC is a system-level chip. The processor 110 may include a central processing unit (central processing unit, CPU), a graphics processing unit (graphics processing unit, GPU), and a display driver integrated circuit (DDIC). The CPU may be an application processor (application processor, AP). The CPU and the GPU may be configured to render and synthesize a picture to be sent to the display screen 130 for display. The processor 110 may further include a neural-network processing unit (neural-network processing unit, NPU), a modem processor, and the like.

The processor 110 may include one or more interfaces, for example, an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (GPIO) interface, a subscriber identity module (subscriber identity module, SIM) interface, and/or a universal serial bus (universal serial bus, USB) interface.

A cache may be disposed in the processor 110, and may be configured to store instructions or data just used or cyclically used by the processor 110. If the processor 110 needs to use the instructions or the data again, the instructions or the data may be directly invoked from the cache. This can reduce a waiting time of the processor 110, and improve program running efficiency.

The memory 120 may include a program storage area and a user data storage area. The program storage area may store an operating system and one or more application programs (such as a game application), and the data storage area may store data (such as a photo and a contact) created in a process in which a user uses the terminal device 200. The memory 120 may be a high-speed random access memory, or may be a non-volatile memory, for example, a magnetic disk, a flash memory, or a universal flash storage (universal flash storage, UFS). Alternatively, the memory 120 may be an external memory card, for example, a micro SD card.

The memory 120 may further store code instructions of an area-based refresh method for a display screen provided in an embodiment of this application. When the processor 110 reads the code instructions from the memory 120 and runs the code instructions, the terminal device 200 may perform the method.

The memory 120 may alternatively be integrated into an integrated circuit of the SOC together with the processor 110.

The terminal device 200 may implement a display function by using the SOC, the DDIC, the display screen 130, and the like.

The display screen 130 may have an area-based frequency conversion function, and may be the display screen 130 described in the foregoing embodiment. The display screen 130 may include a display panel, a timing controller (TCON), and the like. The display panel may include a plurality of pixel units, and may be an organic light emitting diode (OLED) display panel. Each pixel unit includes an OLED. The TCON is mainly configured to connect the GPU or the SOC to the display panel. After receiving image data or a control signal transmitted by the GPU or the SOC, the TCON sets a time sequence of the control signal and a data signal based on a related data or signal, and transmits the control signal and the data signal to a display drive circuit according to the time sequence, so as to drive the display panel to perform graphical display.

The display driver integrated circuit (DDIC) may be used as a control core of the display screen 130, to drive the display screen 130 to work, and receive data from the SOC (the processor 110), for example, image data and some instructions. The DDIC may send a drive signal and data to the display panel of the display screen 130 in a form of an electrical signal, so as to control brightness and a color of the screen, so that image information such as a letter and a picture is displayed on the screen, and screen refreshing is completed.

Image data of a to-be-displayed picture that is transmitted from the SoC to the DDIC may be stored in a frame buffer (Frame Buffer) to complete sending for display (or referred to as picture sending). Then, the DDIC fetches the image data from the frame buffer and drives the display screen 130 to display the image data.

A wireless communication function of the terminal device 200 may be implemented via the antenna 1, the antenna 2, the mobile communication module 150, the wireless communication module 160, the modem processor, a baseband processor, and the like.

The antenna 1 and the antenna 2 are configured to transmit and receive an electromagnetic wave signal. Each antenna in the terminal device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the terminal device 200 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display screen 130. In some embodiments, the modem processor may be an independent component. In some other embodiments, the modem processor may be independent of the processor 110, and is disposed in a same device as the mobile communication module 150 or another function module.

The wireless communication module 160 may provide a solution that is applied to the terminal device 200 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal device 200, the antenna 1 is coupled to the mobile communication module 150, and the antenna 2 is coupled to the wireless communication module 160, so that the terminal device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal device 200 may implement a photographing function via the ISP, the camera 193, a video codec, the GPU, the display screen 130, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 200 may include one or N cameras 193, where N is a positive integer greater than 1.

The digital signal processor is configured to process a digital signal, and may process another digital signal in addition to the digital image signal. For example, when the terminal device 200 selects a frequency, the digital signal processor is configured to perform Fourier Transform on frequency energy.

The video codec is configured to compress or decompress a digital video. The terminal device 200 may support one or more video codecs. In this way, the terminal device 200 can play or record videos in a plurality of encoding formats, for example, moving picture experts group (moving picture experts group, MPEG)1, MPEG2, MPEG3, and MPEG4.

The NPU is a neural-network (neural-network, NN) computing processor, and quickly processes input information with reference to a structure of a biological neural network, for example, a transfer mode between human brain neurons, and may further continuously perform self-learning. The NPU may be used to implement intelligent cognition of the terminal device 200 and other applications, for example, image recognition, facial recognition, speech recognition, and text understanding.

The terminal device 200 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The terminal device 200 may be used to listen to music or answer a call in a hands-free mode via the speaker 170A.

The receiver 170B, also referred to as an "earpiece", is configured to convert an electrical audio signal into a sound signal. When a call is answered or voice information is listened to via the terminal device 200, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal device 200. In some other embodiments, two microphones 170C may be disposed in the terminal device 200. In addition to sound signal collection, a noise reduction function may be further implemented. In some other embodiments, three, four, or more microphones 170C may be alternatively disposed in the terminal device 200, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 190 includes a power button, a volume button, and the like. The button 190 may be a mechanical button, or may be a touch button. The terminal device 200 may receive a button input, and generate a button signal input related to a user setting and function control of the terminal device 200. The motor 191 may generate a vibration prompt. The SIM card interface 195 is configured to connect to a SIM card. The SIM card may be inserted into the SIM card interface 195 or pulled out of the SIM card interface 195, to implement contact with or separation from the terminal device 200.

The structure shown in FIG. 19 does not constitute a specific limitation on the terminal device 200. The terminal device 200 may include components more or fewer than those shown in the figure, or combine some components, or split some components, or have different component arrangements. The components shown in the figure may be implemented by hardware, software, or a combination of software and hardware.

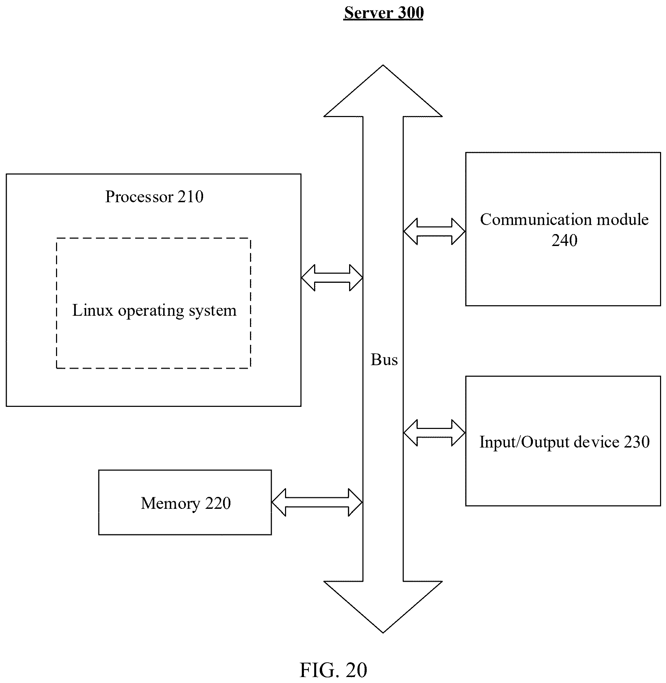

**FIG. 20** shows a server **300 according to an embodiment of this application.** The server 300 may be the cloud server 30 mentioned in the foregoing embodiment. As shown in FIG. 20, the server 300 may include a processor 210, a memory 220, an input/output device 230, a communication module 240, and the like. These components may be coupled by using a bus.

The server 300 may have a powerful computing resource, and the processor 210 thereon may include one or more processors with powerful computing power, for example, a central processing unit (CPU), a neural-network processing unit (NPU), or a graphics processing unit (GPU).

The processor 210 may include one or more interfaces, for example, an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (GPIO) interface, a subscriber identity module (subscriber identity module, SIM) interface, and/or a universal serial bus (universal serial bus, USB) interface.

A cache may be disposed in the processor 210, and may be configured to store instructions or data just used or cyclically used by the processor 210. If the processor 210 needs to use the instructions or the data again, the instructions or the data may be directly invoked from the cache. This can reduce a waiting time of the processor 210, and improve program running efficiency.

The processor 210 may further be externally connected to a memory. The memory may be a high-speed random access memory, or may be a non-volatile memory, for example, a magnetic disk, a flash memory, or a universal flash storage (UFS). Alternatively, the memory may be an external memory card, for example, a micro SD card.

The processor 210 is a computing core of the server 300, and has a powerful computing capability. The processor is coupled to the memory 220, and may be configured to read and execute computer readable instructions in the memory 220, and run an operating system and various programs. Specifically, the CPU 210 may be configured to invoke a program stored in the memory 220, for example, an implementation program of the mobile-cloud collaborative computing power dispatching method provided in the embodiment of this application, and execute instructions included in the program.

The memory 220 may include a high-speed random access memory, a non-volatile memory, such as a magnetic disk, a flash memory, or another non-volatile solid-state storage device. The memory 220 may be configured to store various software programs and a plurality of groups of instructions. The memory 220 may store an operating system, for example, an operating system such as Linux. The memory 220 may further store one or more programs, for example, a program related to patch making, for example, a compiler or a linker. The memory 220 may further store an implementation program of the mobile-cloud collaborative computing power dispatching method provided in the embodiment of this application.

The input/output device 230 may include devices such as a display screen, a keyboard, and a mouse, and may be configured to receive a user input and output a program running result to a user.

The communication module 240 may include a wired communication module and a wireless communication module. The wired communication module may support a wired communication protocol, such as a universal serial bus (universal serial bus, USB), a serial port, or Ethernet, and communicate with another device by using a physical communication cable. The wireless communication module may include a wireless communication module such as 2G/3G/4G/5G, a Wi-Fi communication module, and the like. The wireless communication module receives an electromagnetic wave through an antenna, performs frequency modulation and filtering processing on the electromagnetic wave signal, and sends a processed signal to the CPU 210. The wireless communication module may further receive a to-be-sent signal from the CPU 210, perform frequency modulation and amplification on the signal, and convert the signal into an electromagnetic wave for radiation through the antenna.

The structure shown in FIG. 20 does not constitute a limitation on the server 300. The server 300 may include more or fewer components than those shown in the figure, or combine some components, or split some components, or have different component arrangements. The components shown in the figure may be implemented by hardware, software, or a combination of software and hardware.

Methods or algorithm steps described in combination with the content disclosed in this embodiment of this application may be implemented by hardware, or may be implemented by a processor by executing a software instruction. The software instruction may include a corresponding software module. The software module may be stored in a RAM, a flash memory, a ROM, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a transceiver or a relay device. Certainly, the processor and the storage medium may alternatively exist in a radio access network device or user equipment as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

## Claims

1. A mobile-cloud collaborative computing power dispatching method, wherein the method is applied to a terminal device in a first communication system, the first communication system comprises the terminal device and a server, a first program is installed on the terminal device, a software package of the first program comprises program code, the program code comprises code of a cloud task and code of a mobile task, the code of the cloud task comprises a first code segment, the first code segment is used to declare that a task type is a cloud task, the code of the mobile task comprises a second code segment, and the second code segment is used to declare that a task type is a mobile task; and
the method comprises:
determining, by the terminal device according to a dispatching policy, whether to dispatch a to-be-executed task in the first program to the server for execution, wherein the dispatching policy is formulated based on one or more of the following factors: a task type, power consumption of the terminal device, a temperature of the terminal device, a network status between the terminal device and the server, and a cloud computing power load;
if the to-be-executed task is dispatched to the server for execution, sending, by the terminal device, code of the to-be-executed task to the server, so as to request the server to execute the to-be-executed task by using a cloud computing power resource; otherwise, executing, by the terminal device, the to-be-executed task by using a mobile computing power resource, wherein the mobile computing power resource comprises a processor resource on the terminal device, and the cloud computing power resource comprises a processor resource on the server; and
receiving, by the terminal device, an execution result that is of the to-be-executed task and that is returned by the server.

2. The method according to claim 1, wherein the program code comprises code of a mobile-cloud task, the code of the mobile-cloud task comprises a third code segment, and the third code segment is used to declare that a task type is a mobile-cloud task.

3. The method according to claim 1 or 2, wherein the software package of the first program further comprises a first file, and the first file indicates a dependency relationship between tasks in the first program.

4. The method according to claim 3, further comprising: sending, by the terminal device, the first file to the server, so that the server determines a dependency relationship of the to-be-executed task.

5. The method according to claim 3 or 4, wherein the first file specifically indicates the dependency relationship between the tasks in the first program by recording execution ranks and context data of the tasks, and the context data comprises an input parameter and an output parameter of the task.

6. The method according to any one of claims 1 to 5, wherein the dispatching policy comprises one or more of the following: a task type policy, a mobile power consumption policy, a mobile temperature policy, a network status policy, and a cloud computing power load policy, wherein
the type policy comprises: dispatching the cloud task to the server for execution, and dispatching the mobile task to the terminal device for execution;
the mobile power consumption policy comprises: if a remaining battery level of the terminal device is higher than a first battery level, dispatching the to-be-executed task to the server for execution; otherwise, dispatching the to-be-executed task to the terminal device for execution;
the mobile temperature policy comprises: if a temperature of the terminal device is lower than a first temperature, dispatching the to-be-executed task to the server for execution; otherwise, dispatching the to-be-executed task to the terminal device for execution;
the network status policy comprises: if quality of communication between the terminal device and the server meets one or more of the following: a communication bandwidth is greater than a first bandwidth, and a communication delay is less than a first delay, dispatching the to-be-executed task to the server for execution; otherwise, dispatching the to-be-executed task to the terminal device for execution; and
the cloud computing power load policy comprises: if occupation of the cloud computing power resource is less than a first ratio, dispatching the to-be-executed task to the server for execution; otherwise, dispatching the to-be-executed task to the terminal device for execution.

7. The method according to any one of claims 1 to 6, wherein the software package of the first program further comprises a second file, and the second file is used to record the dispatching policy.

8. The method according to any one of claims 1 to 7, wherein sending, by the terminal device, the code of the to-be-executed task to the server specifically comprises:
sending, by the terminal device, a first request message to the server, wherein a message header of the first request message carries the first file that is serialized into a byte array, and a message body of the first request message carries the code of the to-be-executed task.

9. The method according to claim 8, wherein the first request message further carries an input parameter of the to-be-executed task.

10. The method according to claim 9, wherein the input parameter of the to-be-executed task comprises an execution result of a task on which the to-be-executed task depends.

11. The method according to any one of claims 1 to 10, wherein sending, by the terminal device, the code of the to-be-executed task to the server specifically comprises:
transmitting, by the terminal device, data at a test rate v_test within a first round trip time RRT for sending the code of the to-be-executed task to the server;
receiving, by the terminal device, an acknowledgment ACK that is returned by the server and that is for first-round sent data; and
adjusting, by the terminal device based on a receiving time of the ACK, a transmission rate for sending the code of the to-be-executed task to a start rate v_start, wherein v_start = m/Δt, m represents a data volume of the first-round sent data, Δt = t2 - t1, t1 represents a start transmission time of the first-round sent data, and t2 represents the receiving time of the ACK for the first-round sent data, wherein
the test rate v_test is greater than the start rate v_start.

12. The method according to any one of claims 1 to 11, wherein the method comprises:
obtaining, by the terminal device, one or more types of the following data: delay information, a packet loss rate, and a receiving rate, and analyzing the data to identify noise intensity of a weak network signal, wherein the noise intensity comprises: noise intensity of an RTT jitter and a random packet loss;
if the noise intensity is greater than a first threshold, correcting, by the terminal device, abnormal data causing noise; and
determining, by the terminal device, an available bandwidth based on one or more types of the following data: the delay information, the packet loss rate, and the receiving rate that are corrected.

13. The method according to claim 12, wherein the method further comprises:
identifying, by the terminal device, a traffic valley period during running of the first program, and probing an uplink network bandwidth in the traffic valley period and obtaining an uplink probing bandwidth, wherein the traffic valley period is a phase in which the terminal device transmits code of a first task to the server, and a data volume of the code of the first task is greater than a first data volume; and
adjusting, by the terminal device, a transmission rate during a traffic peak period based on the uplink probing bandwidth and a historical maximum available bandwidth, wherein an adjusted transmission rate is a smaller one of the uplink probing bandwidth and the historical maximum available bandwidth, the traffic peak period is a phase in which the terminal device transmits code of a second task to the server, a data volume of the code of the second task is less than a second data volume, and the second data volume is less than or equal to the first data volume.

14. A mobile-cloud collaborative computing power dispatching method, wherein the method is applied to a server in a first communication system, the first communication system comprises the terminal device and the server, a first program is installed on the terminal device, a software package of the first program comprises program code, the program code comprises code of a cloud task and code of a mobile task, the code of the cloud task comprises a first code segment, the first code segment is machine code converted from source code used to declare that a task type is a cloud task, the code of the mobile task comprises a second code segment, and the second code segment is machine code converted from source code used to declare that a task type is a mobile task; and
the method comprises:
receiving, by the server, code that is of a to-be-executed task in the first program and that is sent by the terminal device, wherein the to-be-executed task is determined by the terminal device to be dispatched to the server for execution;
executing, by the server, the to-be-executed task by using a cloud computing power resource, wherein the cloud computing power resource comprises a processor resource on the server; and
sending, by the server, an execution result of the to-be-executed task to the terminal device.

15. The method according to claim 14, wherein the program code comprises code of a mobile-cloud task, the code of the mobile-cloud task comprises a third code segment, and the third code segment is used to declare that a task type is a mobile-cloud task.

16. The method according to any one of claims 14 and 15, wherein the software package of the first program further comprises a first file, and the first file indicates a dependency relationship between tasks in the first program.

17. The method according to claim 16, further comprising: receiving, by the server, the first file sent by the terminal device, and determining a dependency relationship of the to-be-executed task based on the first file.

18. The method according to claim 16 or 17, wherein the first file specifically indicates the dependency relationship between the tasks in the first program by recording execution ranks and context data of the tasks, and the context data comprises an input parameter and an output parameter of the task.

19. The method according to any one of claims 14 to 18, wherein the dispatching policy comprises one or more of the following: a task type policy, a mobile power consumption policy, a mobile temperature policy, a network status policy, and a cloud computing power load policy, wherein
the type policy comprises: dispatching the cloud task to the server for execution, and dispatching the mobile task to the terminal device for execution;
the mobile power consumption policy comprises: if a remaining battery level of the terminal device is higher than a first battery level, dispatching the to-be-executed task to the server for execution; otherwise, dispatching the to-be-executed task to the terminal device for execution;
the mobile temperature policy comprises: if a temperature of the terminal device is lower than a first temperature, dispatching the to-be-executed task to the server for execution; otherwise, dispatching the to-be-executed task to the terminal device for execution;
the network status policy comprises: if quality of communication between the terminal device and the server meets one or more of the following: a communication bandwidth is greater than a first bandwidth, and a communication delay is less than a first delay, dispatching the to-be-executed task to the server for execution; otherwise, dispatching the to-be-executed task to the terminal device for execution; and
the cloud computing power load policy comprises: if occupation of the cloud computing power resource is less than a first ratio, dispatching the to-be-executed task to the server for execution; otherwise, dispatching the to-be-executed task to the terminal device for execution.

20. The method according to any one of claims 14 to 19, wherein the software package of the first program further comprises a second file, and the second file is used to record the dispatching policy.

21. The method according to any one of claims 14 to 20, wherein receiving, by the server, the code that is of the to-be-executed task in the first program and that is sent by the terminal device specifically comprises:
receiving, by the server, a first request message sent by the terminal device, wherein a message header of the first request message carries the first file that is serialized into a byte array, and a message body of the first request message carries the code of the to-be-executed task.

22. The method according to claim 21, wherein the first request message further carries an input parameter of the to-be-executed task.

23. The method according to claim 22, wherein the input parameter of the to-be-executed task comprises an execution result of a task on which the to-be-executed task depends.

24. A terminal device, comprising a processor and a memory, wherein the memory is coupled to the processor, the memory is configured to store computer program code, the computer program code comprises computer instructions, and when the processor executes the computer instructions, the terminal device is enabled to perform the method according to any one of claims 1 to 13.

25. A server, comprising a processor and a memory, wherein the memory is coupled to the processor, the memory is configured to store computer program code, the computer program code comprises computer instructions, and when the processor executes the computer instructions, the server is enabled to perform the method according to any one of claims 14 to 23.

26. A communication system, comprising a terminal device and a server, wherein the terminal device is the terminal device according to claim 24, and the server is the server according to claim 25.

27. A computer-readable storage medium, comprising instructions, wherein when the instructions are run on a terminal device, the terminal device is enabled to perform the method according to any one of claims 1 to 13.

28. A computer-readable storage medium, comprising instructions, wherein when the instructions are run on a server, the server is enabled to perform the method according to any one of claims 14 to 23.
